# EUROPEAN PATENT APPLICATION

(11) **EP 3 293 967 A1**
(43) Date of publication of application: **14.03.2018**
(21) Application number: 17169145.4
(22) Date of filing: 16.07.1999
(51) Int. Cl.: H04N 5/445

(54) **INTERACTIVE TELEVISION PROGRAM GUIDE WITH REMOTE ACCESS**

(30) Priority: 17.07.1998 US 93292 P; 21.08.1998 US 97527 P
(62) Divisional of application: 08104772.2
(71) Applicant: Rovi Guides, Inc., San Jose, CA 95002 (US)
(72) Inventor: ELLIS, Michael D., Boulder, Colorado 80304 (US); THOMAS, William L., Malvern, Pennsylvania 19355 (US); HASSELL, Joel G., Golden, Colorado 80005 (US); BEREZOWSKI, David M., Tulsa, Oklahoma 74133 (US); KNEE, Robert A., Lansdale, Pennsylvania 74014 (US); MCCOY, Robert A., Broken Arrow, Oklahoma 74014 (US); LEMMONS, Thomas R., Sand Springs, Oklahoma 74063 (US)
(74) Representative: Pisani, Diana Jean

(57) **Abstract**

An interactive television program guide with remote access is provided. The interactive television program guide is implemented on interactive television program guide equipment. A remote program guide access device is connected to the interactive television program guide equipment by a remote access link to provide a user with remote access to program guide functions.

## Description

### Background of the Invention

This invention relates to interactive television program guide video systems, and more particularly, to interactive television program guide systems that provide remote access to program guide functionality.

Cable, satellite, and broadcast television systems provide viewers with a large number of television channels. Users have traditionally consulted printed television program schedules to determine the programs being broadcast at a particular time. More recently, interactive electronic television program guides have been developed that allow television program information to be displayed on a user's television.

Interactive television program guides allow the user to navigate through television program listings using a remote control. In a typical program guide, various groups of television program listings are displayed in predefined or user-defined categories. Listings are typically displayed in a grid or table.

Interactive television program guides are typically implemented on set-top boxes located in the homes of users. A typical set-top box is connected to the user's television and videocassette recorder. The program guide system is therefore not portable. As a result, the user cannot use the program guide to adjust program reminder settings, to select programs for recording, to purchase pay-per-view programs, or to perform other program guide functions without that user being physically located in the same room in the home.

On-line program guides allow users to view program listings using a web-browser. However, the on-line program guides that are available on the Internet do not provide the versatility of in-home program guides. For example, on-line program guides do not allow the user to set in-home reminders for programming, to adjust parental control settings, or to select programs for recording on the user's videocassette recorder.

On-line program guides have also been implemented that allow users to order pay-per-view programs. Such systems allow users to order programs via a web server as opposed to via the telephone or using impulse ordering. A third party takes orders via the internet, bills the user, and provides ordering information to the headend. The headend authorizes the user's set-top to view the ordered program using conventional signal denial or signal scrambling systems without coordinating the ordering of the pay-per-view program with an in-home guide. Ordering pay-per-view programs in this manner (i.e., without coordinating the order with an in-home guide), does not provide users with many of the benefits of ordering pay-per-views through an in-home guide, such as upcoming program reminders or missed program reminders. Users are also not prevented from attempting to order a pay-per-view program with a guide after the program has been ordered.

Program guides that run on personal computers are also available. Such programs guides are useful for users who wish to view program listings information, but who cannot readily access their set-top-box-based program guide. For example, another member of the user's household may be watching television and therefore dominating the use of the set-top box and television. Because there is no way for the user of such a personal computer program guide to coordinate the operation of the personal computer program guide with the operation of the set-top box program guide, the user of a personal computer program guide is not able to use the personal computer program guide to set in-home reminders for programming, to adjust parental control settings, to select programs for recording on the user's videocassette recorder, or to purchase pay-per-view programs.

Presently existing program guide systems therefore require that the user be physically present in the home to access important program guide features such as program reminders, parental control, and program recording.

It is therefore an object of the present invention to provide an interactive televison program guide system in which the program guide may be remotely accessed by the user. Such a system may allow the user to access important features of the user's in-home program guide from a remote location and set program guide settings for those features.

### Summary of the Invention

This and other objects of the present invention are accomplished in accordance with the principles of the present invention by providing an interactive television program guide system with remote access. A local interactive television program guide is implemented on interactive television program guide equipment. The interactive television program guide equipment is connected to one or more remote program guide access devices over a remote access link. A remote access interactive television program guide is implemented on the remote program guide access device. The remote program guide and remote program guide access devices provide users with the opportunity to remotely access features of the interactive television program guide on the interactive television program guide equipment and to remotely set program guide settings.

Any suitable interactive television program guide function or setting may be accessed. The remote access program guide may, for example, provide the user with an opportunity to remotely schedule a reminder for a program, remotely view television program listings, remotely select programming for recordings (storage), remotely play a stored program or a currently broadcasted program on the remote program guide access device, remotely set and navigate through favorites (e.g., favorite channels, program categories, services, etc.), and remotely set parental control settings.

The remote program guide access device may also provide the user with an opportunity to remotely perform additional functions such as sending and playing or displaying messages with the interactive television program guide, polling the interactive program guide for status information, and storing interactive television program guide data at the remote program guide access device.

Providing remote access to these and other features may allow users to control television related activity in ways and in situations in which the users could not do so before. A person who is caught in traffic in an automobile may, for example, access the program guide using appropriate voice commands to access listings for programs that the user anticipates he or she will not arrive home in time to view. The listings may be displayed on a screen, or recited back to the user in synthesized voice listings. The user may select any such programs for recording on their videocassette recorder or other storage device in the home, or on a server at a television distribution facility or other distribution facility. Systems in which users store programs on a remote server are described, for example, in Ellis et al. U.S. patent application Serial No. 09/332,244, filed June 11, 1999 (Attorney Docket No. UV-84), which is hereby incorporated by reference herein in its entirety.

A parent may, for example, access the program guide while at work to see if a child is watching television. If the child should not be watching television, the parent may cause the program guide to display a message to the child (e.g., "Go do your homework!") and then may prevent viewing via a parental control feature. On the other hand, if television viewing is prevented by default (e.g., prevented until the parent arrives home), then the parent may remotely access the program guide to allow a child to watch television.

A person at work may, for example, receive a call from a spouse or other family member at home who explains to the person at work that the person at home cannot operate home television equipment as desired (e.g., "I can't program the VCR!"). The person at work may remotely access the program guide, poll for equipment status information, and perform the desired function.

If desired, non-program-guide applications may be implemented on the user television equipment. Such non-program-guide applications may include, for example, a web browser application, a home shopping application, a game application, an e-mail application, a chat application, a banking application, etc. These applications may be implemented on a set-top box within the user television equipment. The user may adjust the settings of such a non-program-guide application using a remote access device.

Further features of the invention, its nature and various advantages will be more apparent from the accompanying drawings and the following detailed description of the preferred embodiments.

### Brief Description of the Drawings

FIG. 1 is a schematic block diagram of an illustrative system in accordance with the present invention.
FIGS. 2a-2d show illustrative arrangements for the interactive television program guide equipment and remote program guide access device of FIG. 1 in accordance with the principles of the present invention.
FIG. 3 is an illustrative schematic block diagram of the user television equipment of FIG. 2 in accordance with the principles of the present invention.
FIG. 4 is a generalized schematic block diagram of portions of the illustrative television equipment of FIG. 3 in accordance with the principles of the present invention.
FIG. 5 is a schematic block diagram of an illustrative remote program guide access device in accordance with the principles of the present invention.
FIGS. 6a, 6b, and 6c are schematic block diagrams of illustrative arrangements for supporting communications between a remote program guide access device and interactive television program guide equipment over an Internet link in accordance with the principles of the present invention.
FIGS. 7 and 8 are illustrative remote program guide access device display screens in accordance with the principles of the present invention.
FIG. 9 is an illustrative program reminder for display by interactive television program guide equipment or a remote program guide access device in accordance with the principles of the present invention.
FIG. 10 is an illustrative favorites screen for display by a remote program guide access device in accordance with the principles of the present invention.
FIG. 11 is an illustrative status display screen for display by a remote program guide access device in accordance with the principles of the present invention.
FIGS. 12-23 are illustrative flow charts of steps involved in providing remote access to interactive television program guide features in accordance with the principles of the present invention.
FIG. 24 is an illustrative Internet browser screen for display by a remote access device in accordance with the principles of the present invention.
FIG. 25 is an illustrative shopping data entry screen for display by a remote access device in accordance with the principles of the present invention.
FIG. 26 is an illustrative stock ticker data entry screen for display by a remote access device in accordance with the principles of the present invention.

### Detailed Description of the Preferred Embodiments

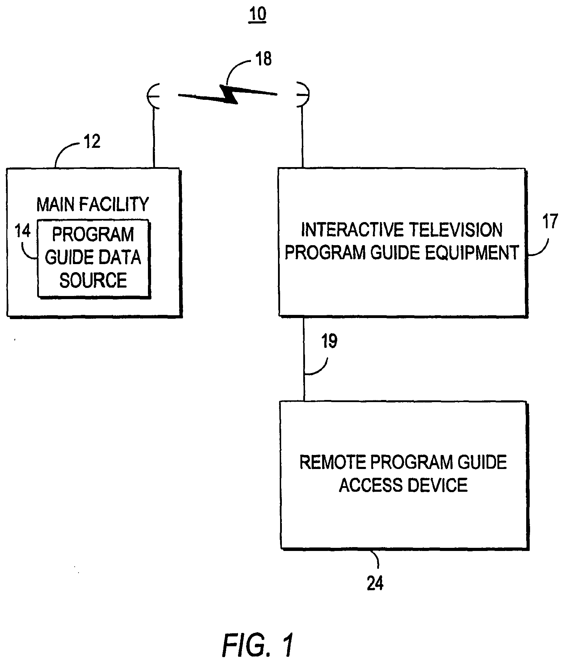

An illustrative system 10 in accordance with the present invention is shown in FIG. 1. Main facility 12 provides interactive television program guide data from program guide data source 14 to interactive television program guide equipment 17 via communications link 18. There are preferably numerous pieces or installations of interactive television program guide equipment 17, although only one is shown in FIG. 1 to avoid over-complicating the drawing. Link 18 may be a satellite link, a telephone network link, a cable or fiber optic link, a microwave link, a combination of such links, an Internet link, or any other suitable communications path.

The interactive television program guide data transmitted by main facility 12 to interactive television program guide equipment 17 may include television program listings data (e.g., program times, channels, titles, and descriptions) and other program guide data for additional services other than television program listings (e.g., pay-per-view information, weather information, associated Internet web links, computer software, etc.). Interactive television program guide equipment 17 may be connected to remote program guide access device 24 via remote access link 19. Interactive television program guide equipment may have more than one associated remote program guide access device 24, although only one such device 24 is shown in FIG. 1 to avoid overcomplicating the drawing.

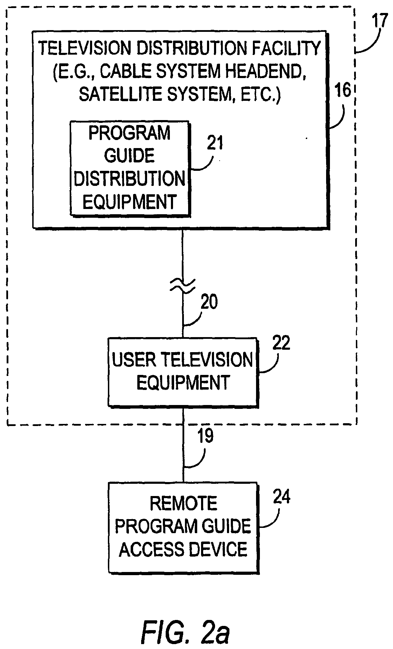

An interactive television program guide is implemented on interactive television program guide equipment 17. Four illustrative arrangements for interactive television program guide equipment 17 is shown in FIGS. 2a-2d. As shown in FIGS. 2a-2d interactive television program guide equipment 17 may include program guide distribution equipment 21 located at television distribution facility 16 and user television equipment 22. Television distribution facility 16 may be any suitable distribution facility (e.g., a cable system headend, a broadcast distribution facility, a satellite television distribution facility, or any other suitable type of television distribution facility). Television distribution facility 16 may distribute program guide data that it received from main facility 12 to multiple users via communications path 20.

Program guide distribution equipment 21 may be any equipment suitable for providing program guide data to user television equipment 22. Program guide distribution equipment 21 may include, for example, suitable transmission hardware for distributing program guide data on a television channel sideband, in the vertical blanking interval of a television channel, using an in-band digital channel, using an out-of-band digital signal, or by any other suitable data transmission technique. Video signals (e.g., television programming) may also be provided by program guide distribution equipment 21 to user television equipment 22 over communications paths 20 on multiple television channels.

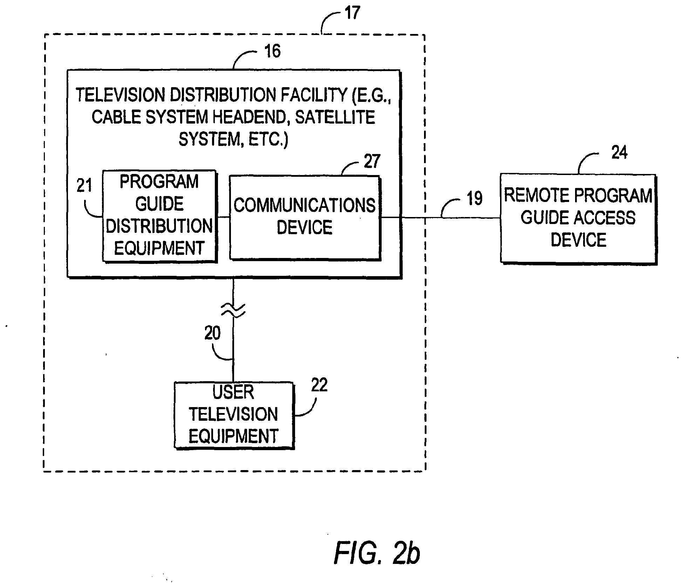

FIGS. 2a and 2b show illustrative arrangements for interactive television program guide equipment 17 and remote program guide access device 24 in systems in which program guide data is provided to user television equipment 22 using a non client-server based approach. For example, program guide data may be provided by television distribution facility 16 to user television equipment 22 in a continuous stream or may be transmitted at a suitable time interval (e.g., once per hour). If transmitted continuously, it may not be necessary to store data locally at user television equipment 22. Rather, user television equipment 22 may extract data "on the fly" as it is needed. If desired, television distribution facility 16 may poll user television equipment 22 periodically for certain information (e.g., pay program account information or information regarding programs that have been purchased and viewed using locally-generated authorization techniques).

In the system configuration of FIG. 2a, remote program guide access device 24 is connected to user television equipment 22. Television distribution facility 16 may distribute program guide data to user television equipment 22. User television equipment 22 may transfer the program guide data to remote program guide access device 24. User television equipment 22 may also transfer additional data that may be necessary for allowing remote program guide access device 24 to access various functions of the interactive program guide (e.g., reminder information, parental control settings, favorite channel settings, user profiles, etc.). Any suitable distribution scheme may be used. For example, user television equipment 22 may provide the data to remote program guide access device 24 continuously, periodically, using a client-server based approach, using a polling scheme, or using any other suitable approach. Remote program guide access device 24 may store the data if suitable for a particular transmission scheme.

In the system configuration of FIG. 2b, remote program guide access device 24 is connected to television distribution facility 16 via communications device 27. In this approach television distribution facility 16 may distribute program guide data to remote program guide access device 24 directly. Television distribution facility 16 may also distribute additional data from user television equipment 22 that may be necessary for allowing remote program guide access device 24 to access various functions of the interactive program guide (e.g., reminder information, parental control settings, favorite channel settings, user profiles, etc.). Television distribution facility 16 may provide the data to remote program guide access device 24 continuously, periodically, using a client-server based approach, using a polling scheme, or using any other suitable approach. Remote program guide access device may store the data if suitable for a particular transmission scheme.

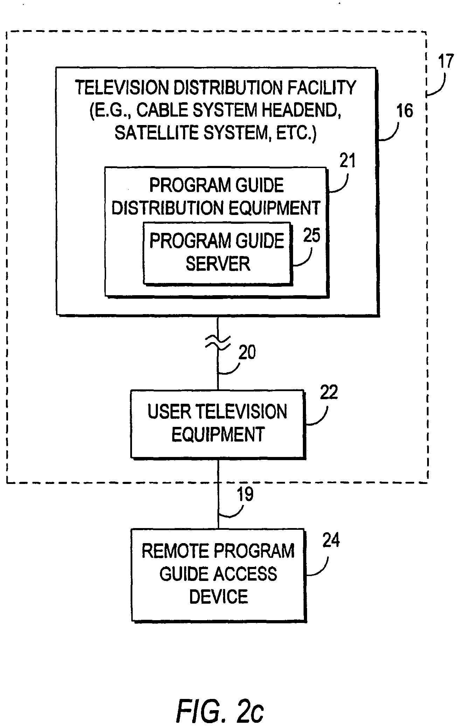

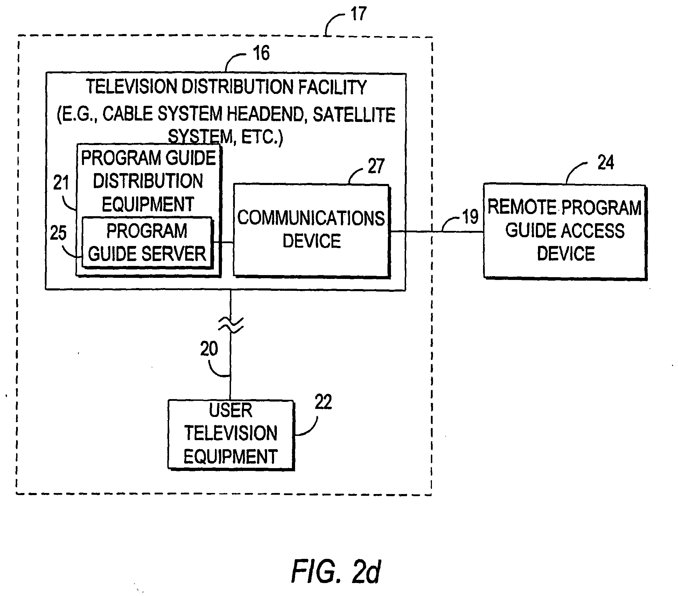

FIGS. 2c and 2d show illustrative arrangements for interactive television program guide equipment 17 and remote program guide access device 24 in client-server based interactive program guide systems. As shown in FIGS. 2c and 2d, program guide distribution equipment 21 may include program guide server 25. Program guide server 25 may be any suitable software, hardware, or combination thereof for providing a client-server based program guide. Program guide server 25 may, for example, generate program guide display screens as digital frames and distribute the frames to user television equipment 22 for display by an interactive program guide client implemented on user television equipment 22. In another suitable approach, program guide server 25 may run a suitable database engine, such a SQL server, and provide program guide data in response to queries generated by user television equipment 22. If desired, program guide server 25 may be located at main facility 12 or at some other facility suitable for providing program guide data via a program guide server (not shown).

Remote program guide access device 24 may, for example, communicate with user television equipment 22 over remote access link 19 as shown in FIG. 2c. Requests, commands, or other suitable communications may be provided by remote program guide access device 24 to user television equipment 22 and then forwarded by user television equipment 22 to program guide server 25. Program guide data or display screens provided by program guide server 25 may be forwarded by user television equipment 22 to remote program guide access device 24.

Alternatively, remote program guide access device 24 may, for example, communicate with program guide server 25 over remote access link 19 via communications device 27 as shown in FIG. 2d. Appropriate commands, requests, or other suitable communications may be transmitted by remote program guide access device 24 for processing by program guide server 25. If any changes to program guide settings are made (e.g., a change to the parental control settings), program guide server may, for example, update a local program guide client running on user television equipment 22 with the necessary information.

In the arrangements illustrated in FIGS. 2b and 2d, television distribution facility 16 may have communications device 27 for communicating with remote program guide access device 24 over remote access link 19. Communications device 27 may be, for example, a communications port (e.g., a serial port, parallel port, universal serial bus (USB) port, etc.), modem (e.g., any suitable analog or digital modem, cellular modem, or cable modem), network interface card (e.g., an Ethernet card, token ring card, etc.), wireless transceiver (e.g., an infrared transceiver or other suitable transceiver), or other suitable communications device.

As shown in FIGS. 1 and 2a-2d, interactive television program guide equipment 17 communicates with remote program guide access device 24 via remote access link 19. In practice, remote program guide access device 24 may be connected to user television equipment 22 (as shown in FIGS. 2a and 2c), television distribution facility 16 (as shown in FIG. 2b), connected to both (as indicated in FIG. 1), or may communicate with remote program guide server 25 (as shown in FIG. 2d) via remote access link 19. Remote access link 19 may be any suitable wired or wireless communications path or paths over which digital or analog communications may take place between interactive television program guide equipment 17 and remote program guide access device 24.

Each user has user television equipment 22 for displaying the television program listings information and other program guide data using a local interactive television program guide. There are typically multiple pieces of user television equipment 22 and multiple associated communications paths 20, although only one piece of user television equipment 22 and communications path 20 are shown in FIGS. 2a-2d to avoid overcomplicating the drawing. Television distribution facility 16 may distribute television programming to user television equipment 22 via communications path 20. If desired, television programming may be provided over separate communications paths (not shown).

For clarity, the present invention is illustrated, unless otherwise indicated, in connection with a system arrangement in which program guide data is distributed from a main facility to an interactive television program guide implemented on user television equipment via a television distribution facility. Other suitable systems involve arrangements in which data is distributed to a program guide on user television equipment using other suitable distribution schemes, such as schemes involving data transmission over the Internet or the like. If desired, the interactive television program guide application may be implemented using a client-server architecture in which the primary processing power for the application is provided by a server located at, for example, the television distribution facility or the main facility (e.g., program guide server 25), and user television equipment 22 acts as a client processor as illustrated by FIGS. 2c and 2d. Alternatively, the interactive television program guide may obtain program guide data from the Internet. On-line program guides are described, for example, in Boyer et al. U.S. patent application Serial No. 08/938,028, filed September 18, 1997, which is hereby incorporated by reference herein in its entirety.

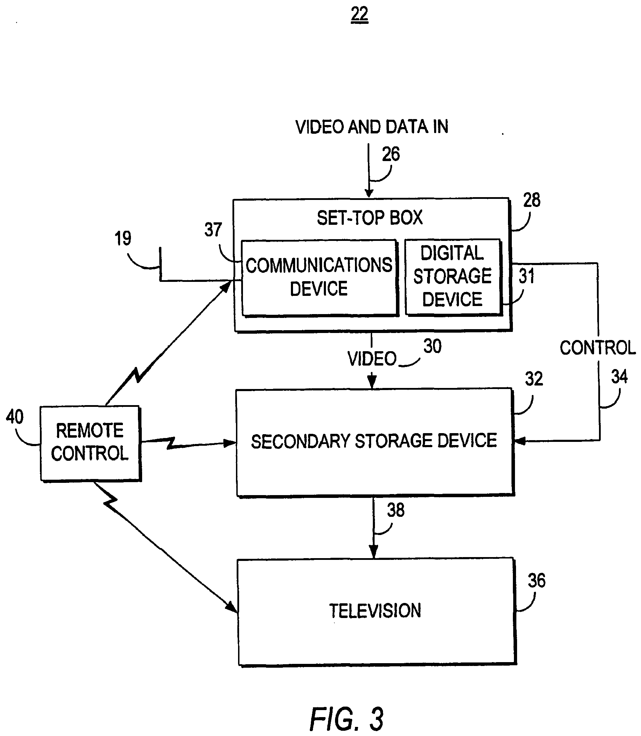

An illustrative arrangement for user television equipment 22 is shown in FIG. 3. User television equipment 22 of FIG. 3 receives video and data from television distribution facility 16 (FIG. 1) at input 26. During normal television viewing, the user tunes set-top box 28 to a desired television channel. The signal for that television channel is then provided at video output 30. The signal supplied at output 30 is typically either a radio-frequency (RF) signal on a predefined channel (e.g., channel 3 or 4), or a analog demodulated video signal, but may also be a digital signal provided to television 36 on an appropriate digital bus (e.g., a bus using the Institute of Electrical and Electronics Engineers (IEEE) 1394 standard, (not shown)). The video signal at output 30 is received by optional secondary storage device 32.

Secondary storage device 32 can be any suitable type of analog or digital program storage device or player (e.g., a videocassette recorder, a digital video disc (DVD) player, a hard-disk based storage device, etc.). Program recording and other features may be controlled by set-top box 28 using control path 34. If secondary storage device 32 is a videocassette recorder, for example, a typical control path 34 involves the use of an infrared transmitter coupled to the infrared receiver in the videocassette recorder that normally accepts commands from a remote control such as remote control 40. Remote control 40 may be used to control set-top box 28, secondary storage device 32, and television 36.

The interactive television program guide may run on set-top box 28, on television 36 (if television 36 has suitable processing circuitry and memory), on secondary storage device 32 or on optional digital storage device 31 (if they have suitable processing circuitry and memory) or on a suitable analog or digital receiver connected to television 36. The interactive television program guide may also run cooperatively on both television 36 and set-top box 28. Interactive television application systems in which a cooperative interactive television program guide application runs on multiple devices are described, for example, in Ellis U.S. patent application Serial No. 09/186,598, filed November 5, 1998, which is hereby incorporated by reference herein in its entirety.

If desired, the user may record programs and program data in digital form on optional digital storage device 31. Digital storage device 31 may be a writable optical storage device (such as a DVD player capable of handling recordable DVD discs), a magnetic storage device (such as a disk drive or digital tape), or any other digital storage device. Interactive television program guide systems that have digital storage devices are described, for example, in Hassell et al. U.S. patent application Serial No. 09/157,256, filed September 17, 1998, which is hereby incorporated by reference herein in its entirety.

Digital storage device 31 can be contained in set-top box 28 or it can be an external device connected to set-top box 28 via an output port and appropriate interface. If necessary, processing circuitry in set-top box 28 formats the received video, audio and data signals into a digital file format. Preferably, the file format is an open file format such as the Motion Pictures Expert Group (MPEG) MPEG-2 standard. The resulting data is streamed to digital storage device 31 via an appropriate bus (e.g., a bus using the Institute Electrical and Electronics Engineers (IEEE) 1394 standard), and is stored on digital storage device 31. Digital storage device 31 and secondary storage device 32 may be integrated into a sophisticated set-top box if desired.

Television 36 receives video signals from secondary storage device 32 via communications path 38. The video signals on communications path 38 may either be generated by secondary storage device 32 when playing back a prerecorded storage medium (e.g., a videocassette or a recordable digital video disc), by digital storage device 31 when playing back a prerecorded digital medium, may be passed through from set-top box 28, may be provided directly to television 36 from set-top box 28 if secondary storage device 32 is not included in user television equipment 22, or may be received directly by television 36. During normal television viewing, the video signals provided to television 36 correspond to the desired channel to which the user has tuned with set-top box 28. Video signals may also be provided to television 36 by set-top box 28 when set-top box 28 is used to play back information stored on digital storage device 31.

Set-top box 28 may have communications device 37 for communicating with remote program guide access device 24 over remote access link 19. Communications device 37 may be, for example, a communications port (e.g., a serial port, parallel port, universal serial bus (USB) port, etc.), modem (e.g., any suitable analog or digital modem, cellular modem, or cable modem), network interface card (e.g., an Ethernet card, token ring card, etc.), wireless transceiver (e.g., an infrared transceiver or other suitable transceiver), or other suitable communications device. Television 36 may also have such a suitable communications device connected to remote access link 19 if desired.

If desired, there may be multiple installations of user television equipment 22 within the home connected via an in-home network. This may provide for coordinating the functionality of multiple guides within the home. Systems in which the functionality of multiple guides are coordinated are described, for example, in concurrently filed Ellis et al. U.S. patent application Serial No. _ (Attorney Docket No. UV-73), which is hereby incorporated by reference herein in its entirety. In such systems, remote program guide access device 24 may be connected via remote access link 19 to one of the guides and may provide users with the ability to remotely coordinate the functions of all of the guides.

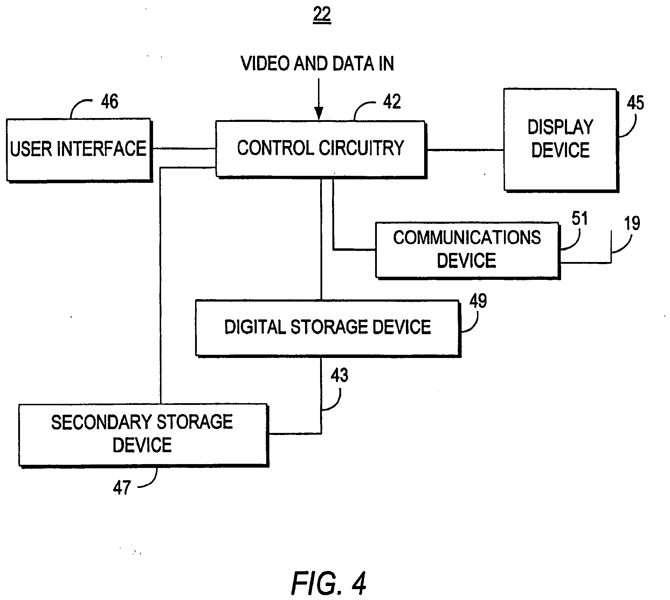

A more generalized embodiment of user television equipment 22 of FIG. 3 is shown in FIG. 4. As shown in FIG. 4, program guide data from television distribution facility 16 (FIGS. 2a-2d) is received by control circuitry 42 of user television equipment 22. Control circuitry 42 may also send data and commands or requests back to television distribution facility 16. The functions of control circuitry 42 may be provided using the set-top box arrangement of FIGS. 2a and 2b. Alternatively, these functions may be integrated into an advanced television receiver, personal computer television (PC/TV), or any other suitable arrangement. If desired, a combination of such arrangements may be used.

The user controls the operation of user television equipment 22 with user interface 46. User interface 46 may be a pointing device, wireless remote control, keyboard, touch-pad, voice recognition system, or any other suitable user input device. To watch television, the user instructs control circuitry 42 to display a desired television channel on display device 45. Display device 45 may be a television, monitor, or other suitable display device. To access the features of the program guide, the user instructs the program guide implemented on interactive television program guide equipment 17 to generate a main menu or other desired program guide display screen for display on display device 45.

User television equipment 22 of FIG. 4 may also have communications device 51 for supporting communications between user television equipment 22 and remote program guide access device 24 over remote access link 19. Communications device 51 may be a communications port (e.g., a serial port, parallel port, universal serial bus (USB) port, etc.), modem (e.g., any suitable analog or digital standard, cellular, or cable modem), network interface card (e.g., an Ethernet card, Token ring card, etc.), wireless transceiver (e.g., an infrared, radio, or other suitable analog or digital transceiver), or other suitable communications device.

User television equipment 22 may also have secondary storage device 47, digital storage device 49, or any suitable combination thereof for recording programming. Secondary storage device 47 can be any suitable type of analog or digital program storage device (e.g., a videocassette recorder, a digital video disc (DVD), etc.). Program recording and other features may be controlled by control circuitry 42. Digital storage device 49 can be, for example, a writable optical storage device (such as a DVD player capable of handling recordable DVD discs), a magnetic storage device (such as a disk drive or digital tape), or any other digital storage device.

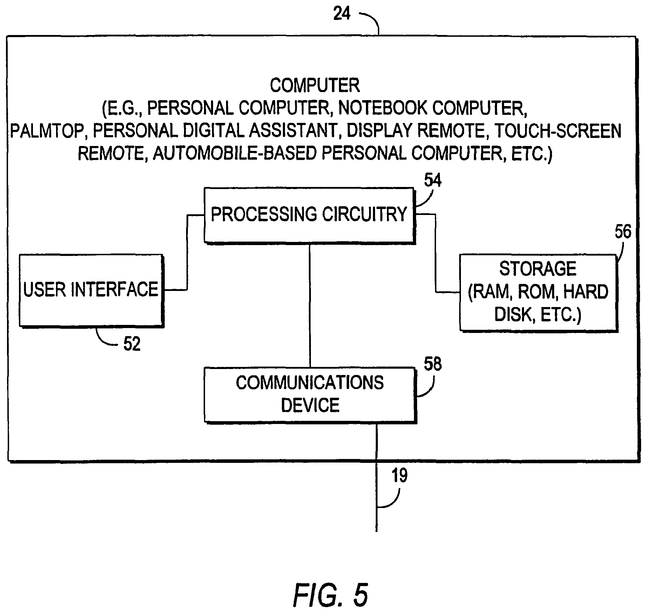

An illustrative arrangement for remote program guide access device 24 is shown in FIG. 5. As shown in FIG. 5, remote program guide access device 24 may be any suitable personal computer (PC), portable computer (e.g., a notebook computer), palmtop computer, handheld personal computer (H/PC), display remote, touch-screen remote, automobile PC, personal digital assistant (PDA), or other suitable computer based device. Remote program guide access device 24 may have user interface 52, processing circuitry 54, storage 56, and communications device 58. User interface 52 may be any suitable input or output device or system, and may include a pointing device, keyboard, touch-pad, touch screen, pen stylus, voice recognition system, mouse, trackball, cathode ray tube (CRT) monitor, liquid crystal display (LCD), voice synthesis processor and speaker, or any other suitable user input or output device. Processing circuitry 54 may include any suitable processor, such an Intel 486 or Pentium® microprocessor. Remote program guide access device 24 may also have storage 56. Storage 56 may be any suitable memory or other storage device, such as RAM, ROM, flash memory, a hard disk drive, etc.

Remote program guide access device 24 may also have communications device 58. Communications device 58 may be any device suitable for supporting communications between remote program access device 24 and interactive television program guide equipment 17 over link 19, such as a communications port (e.g., a serial port, parallel port, universal serial bus (USB) port, etc.), modem (e.g., any suitable analog or digital standard modem or cellular modem), network interface card (e.g., an Ethernet card, token ring card, etc.), wireless transceiver (e.g., an infrared, radio, or other suitable analog or digital transceiver), or other suitable communications device.

Remote access link 19 (FIG. 1) may include any suitable transmission medium. Link 19 may include, for example, a serial or parallel cable, a dial-up telephone line, a computer network or Internet link (e.g., 10Base2, 10Base 5, 10BaseT, 100BaseT, 10BaseF, T1, T3, etc.), an in-home network link, an infrared link, a radio frequency link, a satellite link, any other suitable transmission link or suitable combination of such links. Any suitable transmission or access scheme may be used such as standard serial or parallel communications, Ethernet, Token Ring, Fiber Distributed Data Interface (FDDI), Circuit-Switched Cellular (CSC), Cellular Digital Packet Data (CDPD), RAM mobile data, Global System for Mobile communications (GSM), time division multiple access (TDMA), code division multiple access (CDMA), any other suitable transmission or access scheme, or any suitable combination thereof. Preferably remote access link 19 is bidirectional. If desired, however, certain limited program guide functions may be accessed using a unidirectional link. An advantage of using a unidirectional scheme for link 19 is that such schemes are generally less complicated and then less expensive than bidirectional links.

Remote program guide access device 24 and interactive television program guide equipment 17 may communicate over remote access link 19 using any suitable network and transport layer protocols, if desired. Remote program guide access device 24 and interactive television program guide equipment 17 may communicate, for example, using a protocol stack which includes Sequenced Packet Exchange/Internetwork Packet Exchange (SPX/IPX) layers, Transmission Control Protocol/Internet Protocol (TCP/IP) layers, Appletalk Transaction Protocol/Datagram Delivery Protocol (ATP/DDP) layers, or any other suitable network and transport layer protocols or combination of protocols.

Remote program guide access device 24 may communicate with interactive television program guide equipment 17 using any suitable scheme. Remote program guide access device 24 may, for example, connect to interactive television program guide equipment 17 using a terminal emulation scheme, such as VT100 terminal emulation, and access the interactive television program guide as if it were a "dumb terminal." Remote program guide access device 24 may, for example, run a standard remote access client such as a Windows® Remote Access Services (RAS) client and may connect to a Windows NT® Server process running on interactive television program guide equipment 17. Any suitable combination of hardware and software may be used. In addition to using any of the already mentioned protocols, any number of other access, data-link, network, routing or other protocols may be involved in supporting communications between remote program guide access device 24 and television distribution facility 16 over remote access link 19 (e.g., X.25, Frame Relay, Asynchronous Transfer Mode (ATM), Serial Line Interface (SLIP), point-to-point protocols (PPP), or any other suitable access, data-link, network, routing or other protocol).

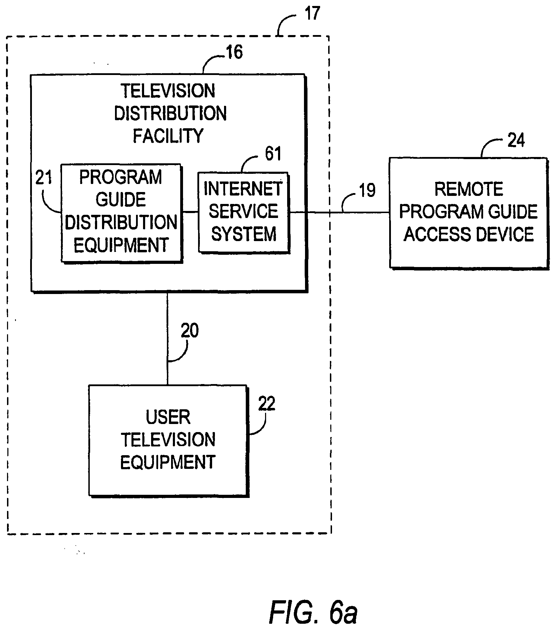

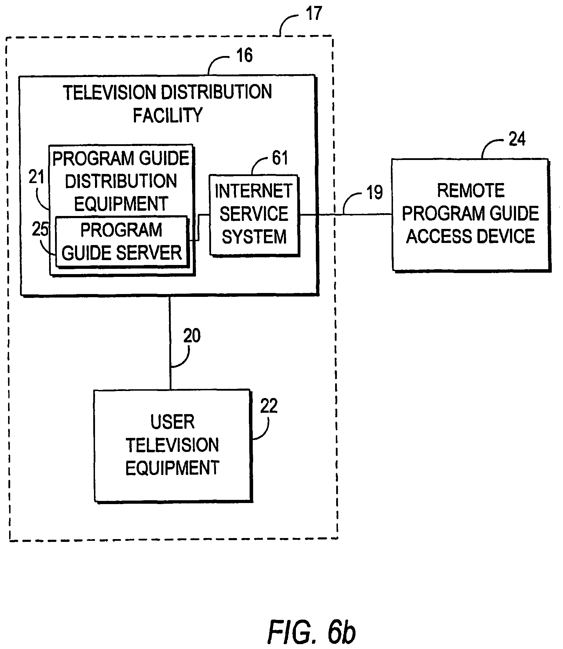

FIGS. 6a and 6b show illustrative arrangements for supporting communications between remote program guide access device 24 and interactive television program guide equipment 17 over an Internet link. Television distribution facility 16 may, for example, include Internet service system 61 for providing Internet-based access to the program guide. Internet service system 61 may be any combination of hardware and software capable of providing an Internet connection to the programming guide. Remote program guide access device 24 may establish an Internet session with Internet service system 61 and thereby obtain program guide data from or set program guide settings with (e.g., set reminders or notifications, view listings, schedule program recording, set favorites, set parental control features, send messages, poll interactive television program guide equipment 17, etc.) the program guide running on interactive program guide equipment 17. If desired, Internet service system 61 may be located at a facility that is separate from television distribution facility 16.

Program guide server 25 may, in turn, interact with the user's client device (e.g., user televison equipment 22). If the program guide is implemented on user television equipment 22 of program guide equipment 17 as shown in FIG. 6a, Internet service system 61 (or other suitable equipment at television distribution facility 16 that is connected to Internet service system 61) may interact with user television equipment 22 directly or via program guide distribution equipment 21 when supporting communications between the program guide and the remote program guide access device. If the program guide implemented on interactive television program guide equipment 17 is a client-server guide as shown in FIG. 6b, Internet service system 61 may interact with program guide server 25 when supporting communications between the program guide and the remote program guide access device 24. Alternatively, Internet service system 61 and program guide server 25 may be the same device or system.

In an illustrative system configuration using Internet service system 61, remote program guide access device 24 is a user's personal computer at work, Internet service system 61 is a web server at a cable system headend, and user television equipment 22 at the user's home contains a set-top box on which the user's program guide is implemented. Using this arrangement, the user may access features of the program guide such as setting reminders or notifications, viewing listings, program recording, setting favorites, parental control, sending messages, polling for status, or any other suitable function. For example, if a child in the user's home desires permission to watch a parentally controlled program while the user is a at work, the user may access a suitable web page provided by Internet service system 61 that allows the user to enter a password and adjust the program guide parental control settings. The changed settings allowing the child access to the desired program are then automatically transferred from Internet service system 61 to user television equipment 22, while the user is still at work.

As another example, the user at work may interact with the program guide on user television equipment 22 via Internet service system 61 to select programs for recording on the user's home videocassette recorder, or to schedule program reminders that will appear on the user's home television or remote program guide access device just before a program is broadcast.

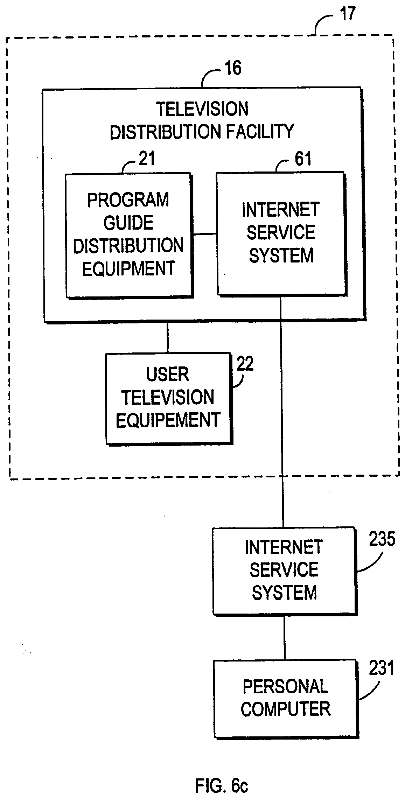

FIG. 6c shows another illustrative arrangement for remote program guide access using the Internet. In the system arrangement of FIG. 6c, users do not directly communicate a local guide via the Internet as with the arrangements of FIG. 6a and 6b. Instead, users may have personal computer (PC) 231 as their remote access device on which a web browser is implemented for accessing an on-line program guide. On-line program guides are described, for example, in above-mentioned Boyer et al. U.S. patent application Serial No. 08/938,028, filed September 18, 1997. Personal computer 231 may be connected to Internet service system 235 via Internet link 233. Internet service system 233 may use any suitable combination of computer hardware and software capable of providing an on-line program guide server application or web site. The user may access a personal web page and set various program guide settings and access various program guide functions. The user may, for example, set favorite channels, set parental control settings, schedule programs for play back or recording by the user's television equipment. After the user has set various program guide settings or accessed various program guide functions via a web page, Internet service system 235 may provide the settings and another program guide information to Internet service system 61 for distribution by program guide server 25 or distribution equipment 21 (as shown) to user television equipment 22. The local guide updates its settings, records programs, plays back programs, or performs any other suitable function accordingly. The local guide may also order pay-per-view programs.

A remote access interactive television program guide may, for example, be implemented on remote program guide access device 24. The remote access interactive television program guide may communicate with the interactive television program guide that is implemented on interactive television program guide equipment 17, herein referred to as a "local" interactive television program guide. The remote access and local guide may, for example, be the same guide but compiled to run on two different platforms and to communicate in a manner or manners discussed herein. Alternatively, the remote access guide may be a client guide that communicates with the local guide (i.e., a server guide). In still another suitable approach, the two guides may be different guides that communicate in a manner or manners discussed disclosed herein. Generally, although not necessarily (e.g., when remote program guide access device 24 is a personal computer as shown in FIG. 6c), the remote access interactive television program guide may have a reduced or limited functionality when compared to the functionality of the local interactive television program guide. Accordingly, the remote access guide may require less processing power and memory of remote program guide access device 24 than the local guide requires of interactive television program guide equipment 17.

Program guide information (e.g., reminder information, listings information, recording information, message information, status information, parental control settings, audio and video, status or polling information, user information, favorites settings, or any other information necessary for remotely providing program guide functionality) may be exchanged, and settings set, between the two interactive television program guides over remote access link 19 using one or more access communications.

Access communications may include, for example, commands, requests, messages, remote procedure calls (e.g., using a proxy-stub pair), or any other suitable client-server or peer-to-peer communication. Access communications may also involve, for example, complex communications between application constructs running on remote program guide access device 24 and interactive television program guide equipment 17. Objects.running in the two versions of the program guides, for example, may communicate using an Object Request Broker (ORB). The program guide information may, for example, be encapsulated as component object model (COM) objects and persisted to files that are transmitted over remote access link 19. In another approach, access communications may include HTML formatted markup language documents (e.g., web pages), that are exchanged between remote program guide access device 24 and interactive television program guide equipment via Internet service system 61.

Program guide information may be transferred, and program guide settings set, between remote program guide access device 24 and interactive television program guide equipment 17 using any suitable application layer protocol if desired. If link 19 is an Internet link, for example, program guide functionality may be accessed by, for example, using the Hypertext Transfer Protocol (HTTP). Remote program guide access device 24 and interactive television program guide equipment 17 may, for example, transfer program guide information as files using the File Transfer Protocol (FTP) or Trivial File Transfer Protocol (TFTP), running over a TCP/IP protocol stack. Any suitable file transfer protocol based on any suitable protocol stack may be used.

Remote program guide access device 24 and interactive television program guide equipment 17 may also exchange program guide data and other information as messages using any suitable messaging scheme or messaging application programming interface (API). Program guide data and other information may, for example, be encapsulated into e-mail messages and transferred using the Simple Mail Transfer Protocol (SMTP), Messaging API (MAPI), or other suitable messaging protocol or API.

Remote program guide access device 24 and the interactive television program guide implemented on interactive program guide equipment 17 may exchange access communications to provide the user with access to program guide functionality as if the program guide were running locally on remote program guide access device 24. Remote program guide access device 24 may provide a user with access to any number of program guide functions such as accessing programming information, scheduling reminders for programs, setting and navigating through favorite channels, setting parental control settings, scheduling programming recordings, or any other program guide function to the extent allowed by the resources of remote program guide access device 24. If desired, remote program guide access device 24 may allow the user to perform other program guide functions, such as determining the status of user television equipment 22, sending messages to user television equipment 22, interacting with peripherals connected to user television equipment, and other suitable functions.

When the user wishes to access the features of the program guide via remote program guide access device 24, the user may issue an appropriate command using user interface 52 (FIG. 5). For example, if the user wishes to view programming information, a "guide" key on user interface 52 can be used. If, for example, user interface 52 includes a microphone and uses suitable voice recognition software, the user may speak a predetermined command into the microphone. Such an interface is especially useful in environments where remote program guide access device 24 must be operated without the use of one's hands, as with an automobile PC.

When possible, remote program guide access device 24 may present program guide data and other information to the user as they are normally presented by user television equipment 22. In practice, appropriate differences in presentation may occur depending on the interface devices used in user television equipment 22 and remote program guide access device 24 (e.g., user television equipment 22 may use a television to output listings and remote program guide access device 24 may include a voice recognition and synthesis system to output synthesized voice listings).

When a user indicates a desire to access program guide features by issuing an appropriate command to remote program guide access device 24, remote program guide access device 24 may, for example, access stored program guide information or obtain program guide information from interactive television program guide equipment 17 via remote access link 19 using any of the approaches already described, and generate an appropriate display screen for display using user interface 52. Alternatively, the local interactive television program guide implemented on interactive television program guide equipment 17 may receive one or more access communications from remote program guide access device 24 over link 19, generate the appropriate program guide display screen, and send the program guide display screen back to remote program guide access device 24 for display on user interface 52. In another embodiment, a remote access guide may run on remote program guide access device 24 and issue access communications over remote access link 19 as if it were running as a client locally on interactive television program guide equipment 17. In another embodiment, remote program guide access device 24 may access a web site and view web pages that contain program guide information.

The remote access program guide running on remote program guide access device 24 may provide a user with an opportunity to remotely access program listings. A person driving an automobile, for example, may issue a suitable vocal command that is recognized by interface 52. The remote access program guide may issue one or more access communications to the local program guide, which in turn supplies program listings information back to remote program guide access device 24. User interface 52 may, for example, provide the listings to the user in synthesized voice outputs.

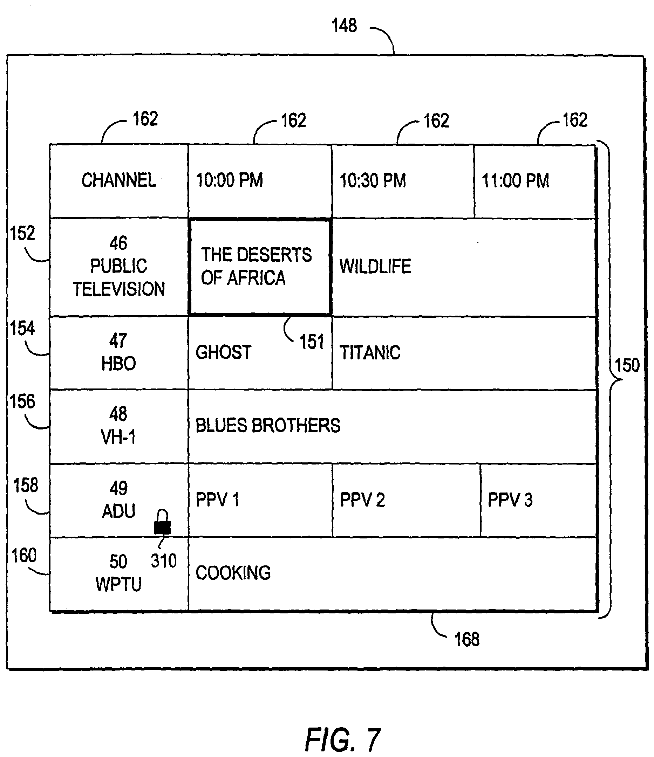

The program listings may also, for example, be displayed in a program listings screen by a suitable display device. A program listings screen may contain one or more lists of programs organized according to one or more organization criteria (e.g., by program type, theme, or any other predefined or user defined and selectable criteria) and sorted in various ways (e.g., alphabetically). One approach is to organize program listings into a program listings grid. As shown in FIG. 7, program listings display screen 148 may contain program listings area 168. Program listings area 168 may display television program listings in any suitable format, such as any suitable list, table, or grid.

FIG. 7 illustrates the display of program listings in program listings grid 150. Program listings grid 150 may be divided into a number of columns 162 which correspond to program broadcast times and which may be equally spaced apart (e.g., in thirty-minute steps). Program listings may be displayed in the grid in sub-sets according to predefined or selectable organization criteria and sorted in various ways. Program listings row 152 contains, for example, selectable program listings for THE DESERTS OF AFRICA and WILDLIFE on channel 46 (Public Television). Program listings row 154 contains, for example, selectable program listings for GHOST and TITANIC on channel 47 (HBO). Program listings row 156 contains, for example, selectable program listings for programs BLUES BROTHERS on channel 48 (VH-1). Program listing row 158 contains selectable program listings for programs, PPV 1, and PPV 2 on channel 49 (ADU). Program listings row 160 contains a selectable program listing for COOKING on channel 50 (WPTU). The programs on each channel are typically different.

Program listings grid 150 may have movable cell highlight region 151, which highlights the current grid cell. The user may position highlight region 151 by entering appropriate commands with user interface 52. For example, if user input interface 52 has a keypad, the user can position highlight region 151 using "up," "down," "left," and "right" cursor keys. Remote program listings may also be panned left, right, up, and down by positioning highlight region 151 using the cursor keys on user interface 52. Alternatively, a touch sensitive screen, trackball, voice commands, or other suitable device may be used to move highlight region 151 or to select program listings without the use of highlight region 151. In still another approach, the user may speak the title of a television program listing into a voice request recognition system which will issue an appropriate command or request to remote program guide access device 24. Any other suitable approach may also be used.

After a user selects a program listing, the remote access program guide may provide the user with the opportunity to access a number of program guide features. For example, the user may access additional information (typically text or graphics, but possibly video if desired) about the listing, schedule an associated program reminder, schedule an associated program for recording by one or more of digital storage device 31 (FIG. 3), secondary storage device 32 (FIG. 3), storage 56 (FIG. 5), or program guide server 25.

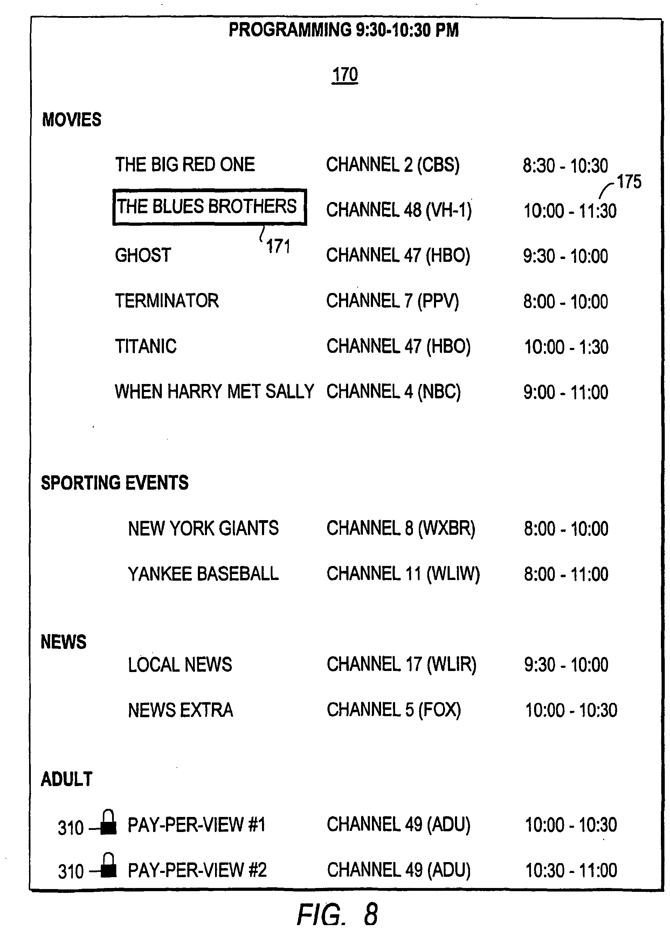

Program listings may also be displayed for the user in a list. FIG. 8 illustrates a program listings display screen having a program listings list displayed in accordance with the principles of the present invention. Scrollable program listings lists may display program listings in subsets according to predefined or user-selected organization criteria. Any suitable organization criteria and sorting scheme may be used. Scrollable program listings list 170 of FIG. 8, for example, organizes program listings according to program type and then sorts the listings alphabetically in each subset. The television program listings display screen of FIG. 8 also has movable cell highlight region 171 for moving within the list and selecting listings.

The remote access program guide may also provide a user with the opportunity to remotely schedule program reminders when the user indicates a desire to set a program reminder (e.g., by pressing a "reminder" button on user interface 52, selecting an on screen "reminder" button, issuing an appropriate vocal command, etc.). The remote access program guide may transmit one or more access communications to the local interactive television program guide implemented on interactive television program guide equipment 17 to schedule the reminder. Alternatively, the remote access program guide may, for example, store a reminder locally on storage 56 of remote program guide access device 24 (FIG. 5). Information indicating the user who set the reminder may also be stored on interactive program guide equipment 17 or storage 56. Reminders may also be scheduled by a user with the local guide, transmitted to remote program guide access device 24, and displayed by the remote access guide on remote program guide access device 24.

At an appropriate time before the selected program is scheduled to air (e.g., a predefined user-selectable number of minutes, hours or days), a reminder may be issued by the local or remote interactive television program guides, or both. The reminder may be issued on all remote program guide access devices 24 available to the user, and may be displayed (e.g., in the form of a pop-up window or message) on user television equipment 22. If a reminder for a program is to be displayed on the user's home television, the reminder may be displayed just before the beginning of the program. If a reminder for a program is to be displayed on remote program guide access device 24, the reminder may be displayed much earlier (e.g., several hours before the program).

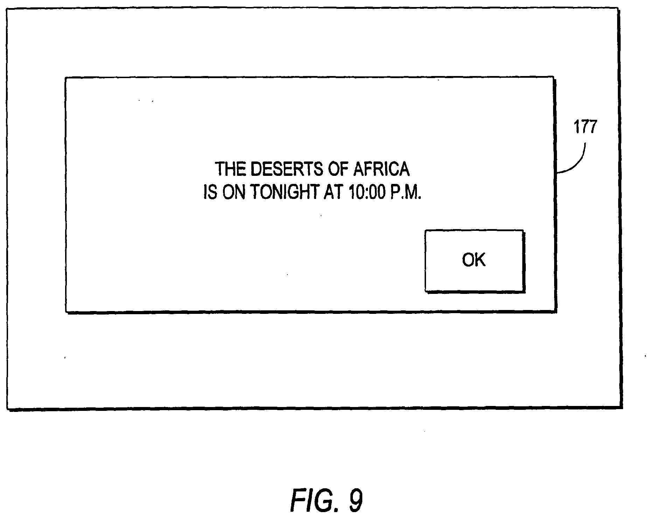

In another approach, reminders may be sent as e-mail messages from the interactive television program guide to remote program guide access device 24. Interactive program guide systems in which reminders are sent to users via e-mail are described, for example, in Boyer et al. U.S. patent application Serial No. 08/987,740, filed December 9, 1997, which is hereby incorporated by reference herein in its entirety. In still another approach, user interface 52 may include an alphanumeric pager (among other suitable devices for providing bi-directional communications with the program guide via remote access link 19). The interactive program guide implemented on interactive television program guide equipment 17 may phone an automatic paging service (e.g., by using a suitable modem and communications software), and issue a message similar to the one contained in notification 177. An illustrative reminder 177 for display on display device 45 (FIG. 4) or user interface 52 (FIG. 5) is shown in FIG. 9.

The remote access program guide may also provide a user with the opportunity to remotely access and adjust the parental control settings of the local interactive television program guide implemented on interactive television program guide equipment 17. The remote access program guide, for example, may provide users with an opportunity to block potentially objectionable programs or channels using a parental control code (e.g., a personal identification number (PIN) code). Users my also selectively unlock blocked channels or programs. If desired, the user may remotely access parental control settings related to blocking the display of potentially objectionable program listings.

The remote access program guide may obtain parental control information (e.g., which channels, services, programs, genres or types of program listings may be locked, maximum rating information, PIN information, etc.), from the local program guide implemented on interactive television program guide equipment 17 over remote access link 19 in any suitable manner. Remote program guide access device 24 may, if desired, store parental control information on storage 56. Information indicating the user who accessed and adjusted parental control settings may be stored by the program guide or remote program guide access device 24.

Remote program guide access device 24 may provide a user with the opportunity to remotely parentally control television programming by, for example, providing the user with the opportunity to select a television program listing and issue an appropriate command using user interface 52 (e.g., by pressing a displayed "lock" button, using a pointing device or touch sensitive screen, issuing an appropriate vocal command, etc.). Remote program guide access device 24 may indicate to a user that a channel, service, program, or genre is locked by, for example, generating an appropriate notice, icon, synthesized voice response, message, or any other suitable indication. FIGS. 7 and 8 illustrate the use of lock icon 310 for indicating, for example, that television service ADU is locked.

The remote access program guide may also provide users with an opportunity to remotely access interactive television program guide functionality related to user preferences or "favorites" settings. For example, remote program guide access device 24 may access features for setting-up and navigating through favorite channels or programs. Interactive television program guide systems in which program guide data is displayed according to preference profiles are described, for example, in Ellis et al. U.S. patent application Serial No. 09/034,934, filed March 4, 1998, which is hereby incorporated by reference herein in its entirety.

The remote access program guide may obtain information on the user's preferences (e.g., which channels or programs are favorites, favorite themes, likes and dislikes etc.) from the local interactive television program guide implemented on interactive television program guide equipment 17 in any suitable manner. The remote access program guide may, if desired, store favorites information on storage 56 (FIG. 5), may provide the user with an opportunity to remotely adjust channel settings and other preferences based on the favorites information. Remote program guide access device 24 may transmit changed or new favorites information to interactive television program equipment. 17 via remote access link 19 using one or more access communications. Information indicating the user who changed the profiles may also be stored by the local or remote access program guides.

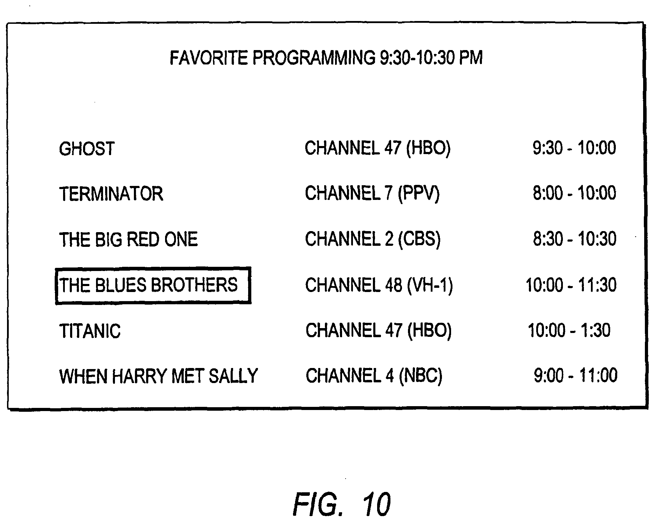

The information on the user's preferences may be used by the local and remote access interactive program guides to navigate through favorite channels and display television program listings. FIG. 10 shows an illustrative program listings display screen that may be displayed by the remote access program guide on remote program guide access device 24 using user interface 52. The display screen includes a number of channels that have been selected as favorites (e.g., channels 2, 4, 7, 47 and 48). Alternatively, remote program guide access device 24 may, for example, display television program listings in a grid, table, or list while highlighting favorite channels or preferred programs. A user may be provided with the opportunity to "scroll" between favorite listings or channels by issuing an appropriate command using user interface 52. In still another suitable approach, remote program guide access device 24 may display program guide data for only those programs or channels that are of interest to users as defined by the profiles.

User preference profiles may also be used to limit the amount of data provided to remote program guide access device 24 and thereby tend to minimize the bandwidth requirements of remote access link 19. Data filtering may be performed, for example, by the local interactive guide according to the user profiles when transferring data to remote program guide access device 24. Only data for those programs or channels that are of interest to the user may be transferred if desired. Alternatively, data filtering may be performed, for example, by program guide server 25 or Internet service system 61.

The remote access program guide may also provide the user with the opportunity to remotely schedule recordings using the local interactive program guide. The user may, for example, select a program listing using user interface 52 (FIG. 5) and issue an appropriate command (e.g., pushing an on-screen "button," issuing an appropriate voice command, etc.). The remote access program guide may respond by sending one or more access communications to the local interactive program guide implemented on interactive television program guide equipment 17 with the remote program guide access device 24 to record the program associated with the selected listing when the program is aired. The local program guide may store the program on secondary storage device 32, digital storage device 31, or on storage 56 of remote program guide access device 24. Information indicating the user who scheduled a program for recording may also be stored by the program guide or remote program guide access device 24. If the programming is stored on storage 56, it may be transmitted to remote program guide access device 24 in any suitable format (e.g., as National Television Standards Committee (NTSC) video, as MPEG-2 files, etc.), and may be converted to a digital format by a suitable analog to digital converter in remote program guide access device 24 if necessary (not shown). Any suitable transmission scheme may be used, such as using FTP if files are transferred, for example, across an Internet link. Programs may also be recorded by program guide server 25. Program guide systems in which user selected programs are stored by a program guide server are described, for example, in above-mentioned Ellis et al. U.S. patent application Serial No. 09/332,244, filed June 11, 1999.

If desired, program series may be recorded. Interactive television program guide systems in which program series are recorded are described, for example, in Knudson et al. U.S. patent application Serial No. 09/330,792, filed June 11, 1999, which is hereby incorporated by reference herein in its entirety.

Program guide information may also be stored by the remote access interactive television program guide on storage 56. User settings and profiles, video clips, and detailed descriptive information may also be stored. Storing programming or data on storage 56 may be appropriate in situations, for example, where the data is required to be maintained across a power outage, or if the volume of data that the interactive program guide must store during normal operation is more than interactive television program guide equipment 17 can handle.

The remote access program guide may also provide a user with an opportunity to remotely order pay-per-view programs and packages. The remote access program guide may, for example, provide the user with an opportunity to select a pay-per-view program or package listing using user interface 52 (e.g., by using a pointing device, touch sensitive screen, or issuing a voice command to select a pay-per-view program listing). In response to the user command, remote program guide access device 24 may obtain pay-per-view information (e.g., price, ordering information, time, event code, etc.) from the interactive television program guide running on interactive television program guide equipment 17, via remote access link 19. Alternatively, the pay-per-view information may have been provided to remote program guide access device 24 by the local guide, program guide server 25, or Internet Service system 61.

The remote access program guide may provide the pay-per-view information to the user using user interface 52, and may provide the user with the opportunity to order the pay-per-view selection. Once the user issues an appropriate command to remote program guide access device 24 to order the pay-per-view selection, the remote access guide on remote program guide access device 24 may indicate to the local guide implemented interactive program guide equipment 17 (e.g., via one or more access communications) the program that the user wishes to order. The local interactive program guide may respond by ordering the pay-per-view program from television distribution facilitating 16 or some other distribution facility. Alternatively, the remote access program guide may order the pay-per-view program from television distribution facility 16 (or some other distribution facility) and indicate the ordered pay-pay-view to the local guide so that ordering related functions may be coordinated.

Remotely ordering pay-per-view programs via the local interactive guide as opposed to ordering pay-per-view programs directly from a headend by phone, internet, or impulse ordering using the remote access guide may allow the local program guide to perform functions that it would not ordinarily be able to perform. Ordering a pay-per-view through the local guide as opposed to directly from television distribution facility 16 may allow the local guide to, for example, parentally control the ordering of a program, inform the user that the program is about to start, inform the user that the user has missed an ordered pay-per-view program, provide the user with an opportunity to reorder the program, or any other suitable function associated with ordering a pay-per-view program.

The remote access program guide may also provide the user with an opportunity to remotely access video and audio (either together or separately) that is being distributed to the local interactive television program guide or which has been stored by the local interactive television program guide on user television equipment 22 or at a remote server. In response to an appropriate user command on user interface device 56, the remote access program guide may, for example, query the interactive television program guide for media directory information stored on digital storage device 31 or secondary storage device 32. Interactive television program guides which store programming using a digital media directory are described, for example, in the previously mentioned Ellis et al. U.S. patent application Serial No. 09/157,256.

The remote access program guide may provide the user with the opportunity to select a directory entry or may, for example, provide the user with an opportunity to select a program listing of a television program that is being broadcast. In response to either selection, the remote access program guide may issue an appropriate access communication to the interactive television program guide to play back or tune to the selection and transmit it back to remote program guide access device 24 over remote access link 19. Remote program guide access device 24 may play the video or audio for the user. In one approach, for example, remote program guide access device 24 may provide a user with the opportunity to access audio from a digital music channel which is received by interactive television program guide equipment 17, and play the audio on a speaker or by using an audio device that may be contained in user interface 52 (e.g., a car stereo).

Video and audio may be transmitted from interactive television program guide equipment 17 to remote program guide access device 24 over remote access link 19 in any suitable format (e.g., as NTSC video, as MPEG-2 files, using the M-bone, etc.), and may be converted to a digital format if necessary by a suitable analog to digital converter in remote program guide access device 24 (not shown). Any suitable transmission scheme may be used.

The remote access program guide may also provide a user with the opportunity to poll the local interactive television program guide to determine the status of interactive television program guide equipment 17 or, more specifically, user television equipment 22. For example, the remote access program guide may obtain information regarding whether the interactive television program guide is in use, what channel user television equipment 22 is tuned to, the title of the current program, the rating of the current program, the status of remote access link 19, available devices, etc. Any suitable scheme may be used, such as using a Simple Network Management Protocol (SNMP) approach in which a management client process runs as part of the interactive television program guide implemented on interactive television program guide equipment 17, and in which a management server process runs on remote program guide access device 24.

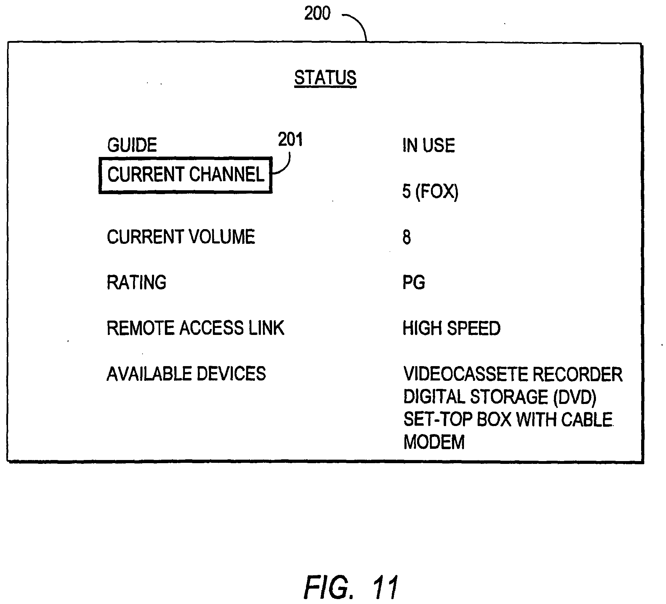

When the user issues an appropriate command using user interface device 56 (e.g., by pressing a button on a key pad, selecting an on-screen option or button, issuing an appropriate voice command, etc.), the remote access program guide may respond by issuing an access communication to the interactive program guide over remote access link 19 using remote program guide access device 24. The interactive program guide may respond by transmitting the desired status information back to remote program guide access device 24 over remote access link 19, or by transmitting a display screen (if appropriate). The remote access program guide may indicate the status of interactive television program guide equipment 17 on remote program guide access device 24 using any suitable indicator (e.g., a display screen, synthesized voice responses, etc.). An illustrative status display screen 200 for display using user interface 52 is shown in FIG. 11.

The remote access program guide may also provide a user with an opportunity to control user television equipment 22 remotely. A user may, for example, position highlight region 201 over a setting, select the setting, and change its value. The user may, for example, change the current channel, the current volume, or control user television equipment 22 in any other suitable manner.

The remote access program guide may also provide a user with the opportunity to send audio, graphical, and text messages to the local interactive program guide for playing or display by user television equipment 22. For example, the remote access program guide may receive a voice message from the user using user interface device 24. That voice message may be converted to a digital signal by an analog-to-digital converter in remote program guide access device 24 if necessary, and sent to the interactive television program guide over remote access link 19. Once received, the local interactive television program guide may play (or display) the message on user television equipment 22. If desired, messages created by a user on the local interactive television program guide or by an operator of television distribution facility 16 may be sent to remote program guide access device 24. The remote access program guide may in turn provide the messages to the user using remote program guide access device 24.

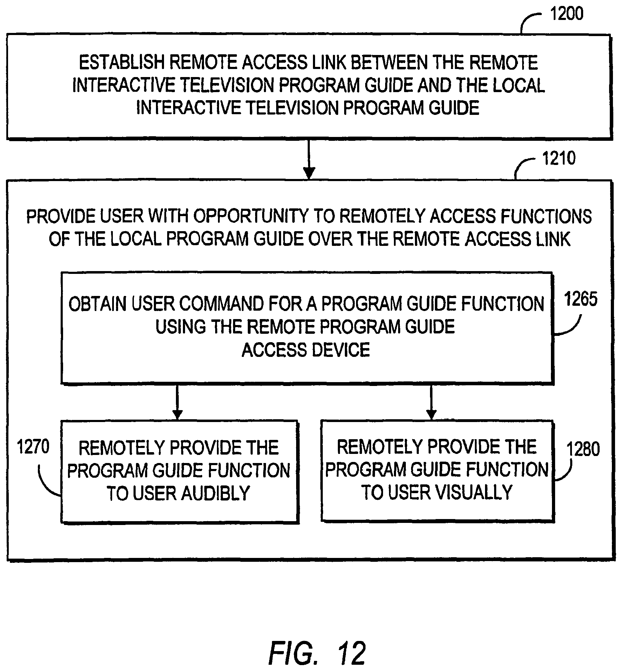

FIGS. 12-24 are illustrative flow charts of steps involved in providing remote access to functions of a local interactive television program guide in accordance with the principles of the present invention. The steps shown in FIGS. 12-24 are illustrative and may be performed in any suitable order. Moreover, in practice it may be desirable to combine or delete various steps or combinations of steps shown in the flow charts.

FIG. 12 shows illustrative steps involved in providing remote access to the various program guide functions. At step 1200, a remote access link is established between the remote access program guide implemented on remote program guide access device 24 and the interactive television program guide implemented on interactive television program guide equipment 17 using remote access link 19. At step 1210, the remote access program guide provides the user with the opportunity to remotely access functions of the interactive program guide over the remote access link.

The remote access program guide may, for example, obtain a user command from the user that indicates a desired program guide function using remote program guide access device 24 (substep 1265) and then remotely provide the indicated program guide function to the user. A user may indicate a desired function by entering an appropriate command using user interface 52. The user may, for example, enter a command using a keyboard, speak a command into a microphone, select an on-screen button using a pointing device, or any other suitable approach.

The indicated program guide function may be remotely provided to the user audibly (substep 1270) using, for example, a speaker, car stereo, or other device capable of producing sounds that suitably indicate to the user program guide information. Alternatively, the indicated program guide function may be remotely provided to the user visually (at substep 1280), for example, by using a monitor, LCD, or other display device.

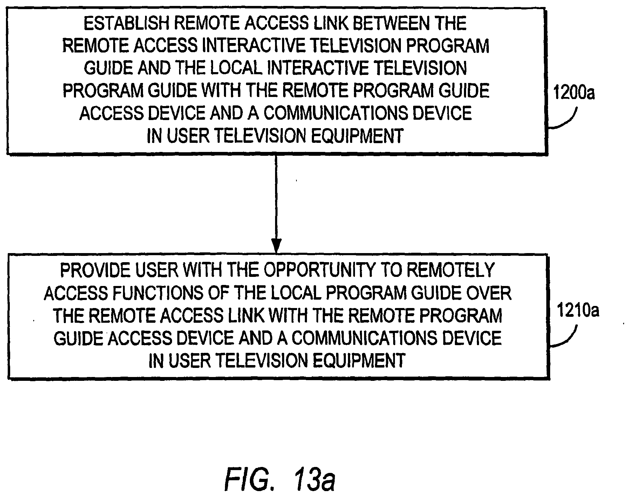

Establishing the remote access link between the remote access program guide and the local interactive television program guide implemented on interactive television program guide equipment 17 as indicated by step 1200 and providing the user with an opportunity to remotely access functions of the local interactive television program guide over remote access link 19 (step 1210) may depend on the configuration of the interactive television program guide system. FIGS. 13a-13e show illustrative variations of steps 1200 and 1210 of FIG. 12 for establishing remote access link 19 and for providing the user with remote access to program guide functions for the illustrative systems 10 of FIGS. 2a-2d and FIGS. 6a-6c.

FIG. 13a illustrates steps involved in establishing remote access link 19 and for providing the user with remote access to program guide functions in the systems of FIGS. 2a and 2c. In these systems, remote access link 19 may be established between the remote access program guide and the interactive television program guide via a communications device in user television equipment 22 (Step 1200a). The local interactive television program guide may be wholly implemented on user television 22 as in system 10 of FIG. 2a, or may be partially implemented on user television equipment 22 as, for example, an interactive program guide client, as in system 10 of FIG. 2c. At step 1210a, remote program guide access device 24 may provide the user with the opportunity to remotely access the functions of the local interactive television program guide over the remote access link with a communications device.

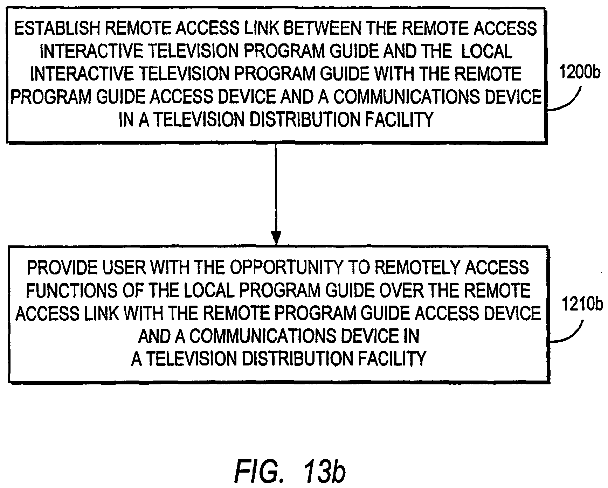

Remote access link 19 may be established between the remote access program guide and the interactive television program guide via remote program guide access device 24 and a communications device in television distribution facility 16 or other location for a system configured as shown in FIG. 2d. Providing remote access to the functions of the local interactive television program guide in such a system may, for example, involve the steps shown in FIG. 13b. At step 1200b, for example, remote access link 19 may be established with a communications device in television distribution facility 16. The remote access program guide may, for example, provide the user with the opportunity to remotely access functions of the program guide with a communications device in the television distribution facility 16 at step 1210b.

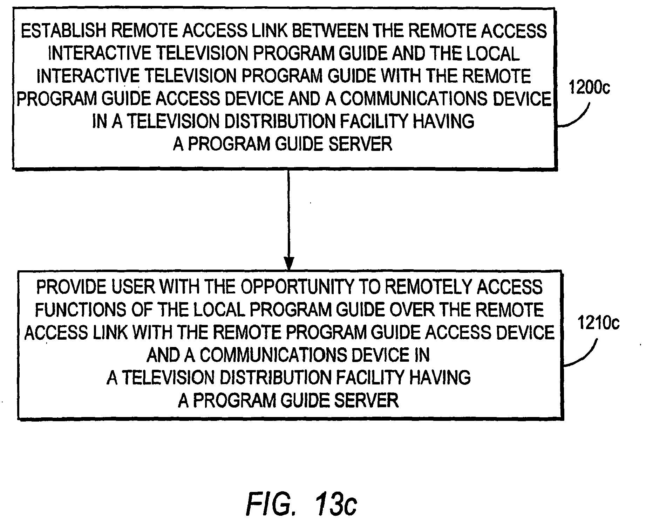

If television distribution facility 16 includes a program guide server as shown in FIG. 2c, remote access link 19 may be established between the remote access program guide and the interactive television program guide via remote program guide access device 24 and a communications device in television distribution facility 16 as indicated by step 1200c of FIG. 13c. At step 1210c remote program guide access device 24 may, for example, provide the user with the opportunity to remotely access the functions of the program guide over remote access link 19 with a communications device in distribution facility 16.

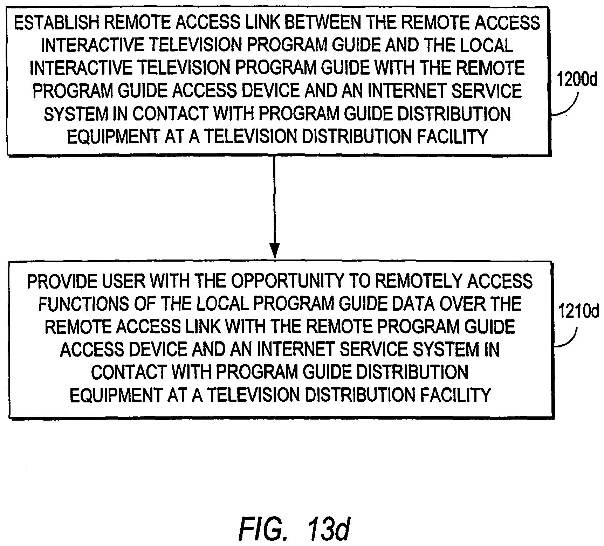

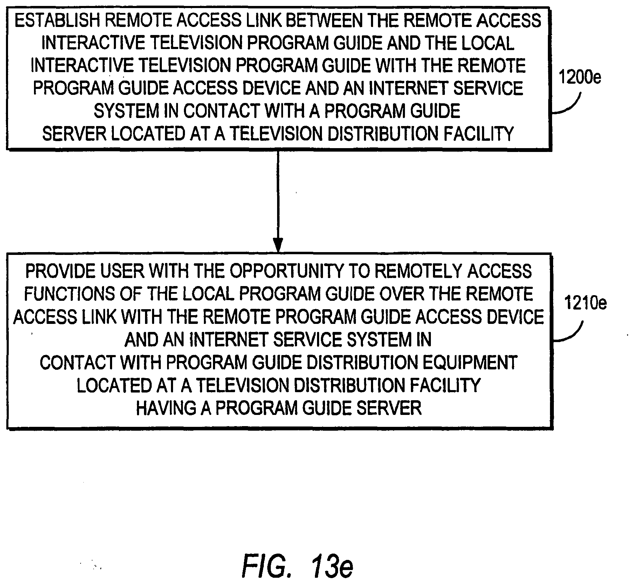

Steps involved in establishing remote access link 19 in on-line program guide systems that communicate with the remote access program guide such as in systems 10 of FIGS. 6a and 6b are shown in FIGS. 13d and 13e. In the on-line program guide system of FIG. 6a, for example, remote access link 19 may be established between the local interactive television program guide and the remote access program guide with Internet service system 61 (step 1200d, FIG. 13d). In the client-server on-line program guide system of FIG. 6b, for example, remote access link 19 may be established between the local interactive television program guide and the remote access program guide with an Internet service system in contact with program guide server 25 (step 1200e, FIG. 13e). The remote access program guide may provide the user with the opportunity to remotely access the functions of the program guide at steps 1210d and 1210e of FIGS. 13d and 13e, respectively.

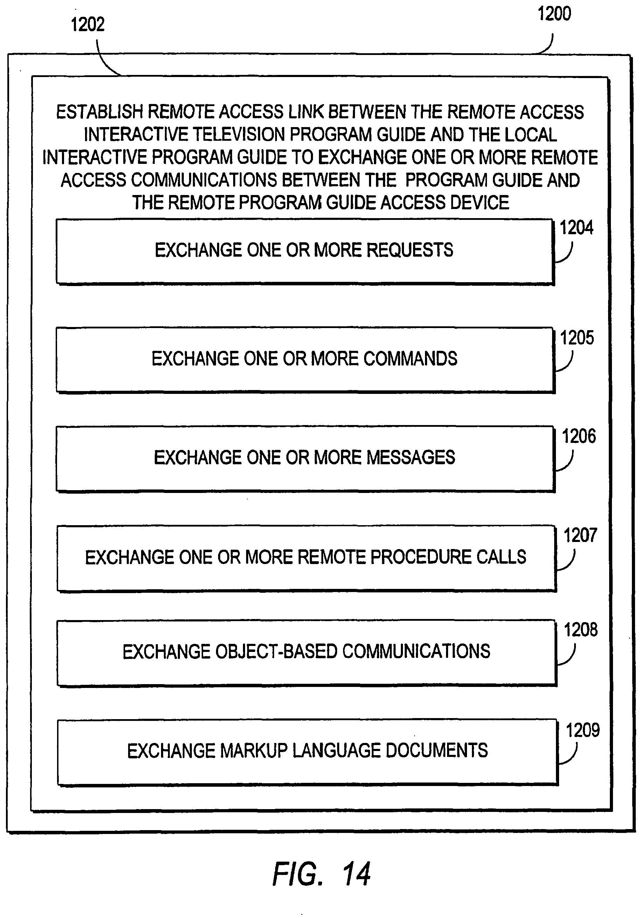

Establishing remote access link 19 at step 1200 of FIG. 12 may also involve exchanging one or more access communications between the interactive television program guide implemented on interactive television program guide equipment 17 and the remote access program guide implemented on remote program guide access device 24, as indicated by substep 1202 of FIG. 14. Access communicators may include any client-server or peer-to-peer communication construct suitable for providing program guide information across remote access link 19. Access communications may include, for example, requests, commands, messages, or remote procedure calls, as indicated by substeps 1204, 1205, 1206, and 1207, respectively.

Access communications may also involve complex communications between application constructs running on remote program guide access device 24 and interactive television program guide equipment 17. Access communications may, for example, be object based, as indicated by substep 1208. Objects running in two program guides, for example, may communicate using an Object Request Broker (ORB). The program guide information may, for example, be encapsulated as component object model (COM) objects and persisted to files that are transmitted over remote access link 19. Access communications may also include, for example, HTML formatted markup language documents (e.g., Web pages), that are exchanged between remote program guide access device 24 and interactive television program guide equipment 17 via Internet service system 61, as indicated by substep 1209.

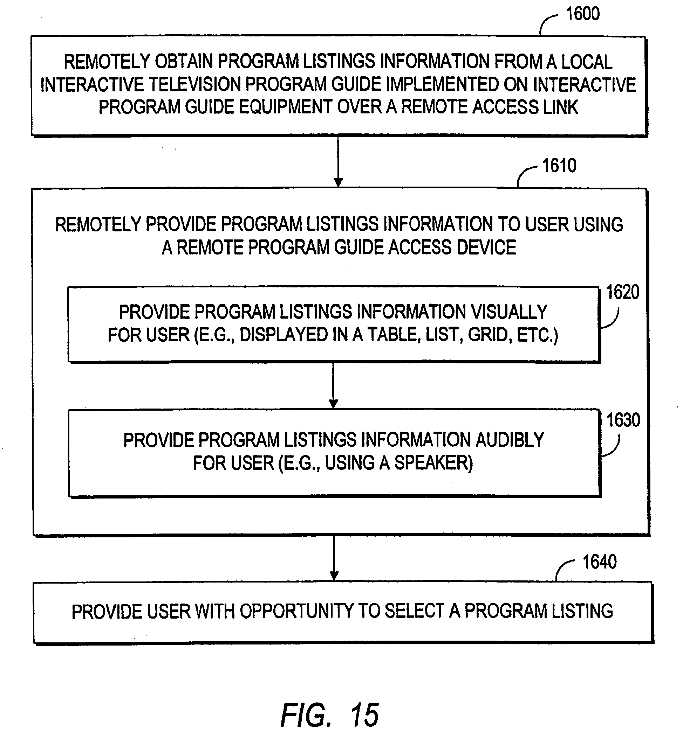

FIGS. 15-23 are flowcharts of illustrative steps involved in providing remote access to a number of specific program guide functions. Remote access to the functions may be provided in any interactive television program guide system, such as a system 10 having the arrangements of interactive television program guide equipment 17 shown in FIGS. 2a-2d and FIGS. 6a and 6b. The steps shown in FIGS. 12-14 are not shown in the flowcharts of FIGS. 15-23 to avoid over-complicating the drawings, although any suitable combination or combinations of the steps of the flowcharts of FIGS. 12-23 may be used in practice.

FIG. 15 shows illustrative steps involved in remotely providing program listings information to a user. At step 1600, program listings information is remotely obtained from the local interactive television program guide implemented on interactive television program guide equipment 17 via remote access link 19. The remote access program guide may, for example, obtain this information on startup, periodically, continuously, on demand in response to a suitable user command, or using any other suitable scheme using remote program guide access device 24.

At step 1610, the program listings information may be provided to the user. The program listings information may be displayed for the user by the remote access program guide in a table, listing grid, or other suitable construct, using user interface 52 (substep 1620). Alternatively, program listings information may be provided audibly for the user by using, for example, a speaker (substep 1630).

At step 1640, the remote access program guide may provide the user with the opportunity to select a program listing. In response to such a selection, the remote access program guide may provide the user with the opportunity to access other remote program guide features for the listing (e.g., displays additional info, schedule a program reminder, record, parental control, order the program if it is a pay-per-view program, etc.).

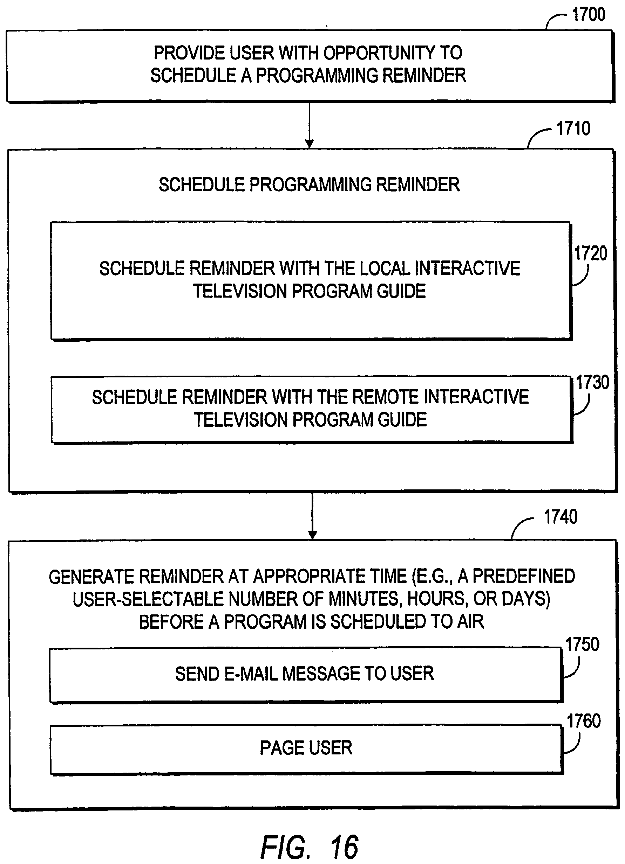

FIG. 16 shows illustrative steps involved in providing the user with remote access to the program reminder feature of a local interactive television program guide. At step 1700, a user is provided with an opportunity to schedule a programming reminder. The user may be provided with an opportunity to remotely schedule a programming reminder with the local guide or with the remote access guide. This opportunity, may, for example, be provided in response to the user selection of a program listing. At step 1710, the program reminder is scheduled by the local guide or the remote access guide. The program reminder may be scheduled with the local interactive television program guide (substep 1720), may be stored by the remote access interactive television program guide (substep 1730), or both.

At step 1740, the program reminder is generated at an appropriate time (e.g., a predefined or user-selectable number of minutes, hours, or days) before a program is scheduled to air. The reminder may be generated by the local interactive television program guide implemented on interactive television program guide equipment 17, or may be generated by the remote interactive television program guide. The program reminder may, for example, be sent to the user via e-mail or alphanumeric page, as indicated by substeps 1750 and 1760 respectively.

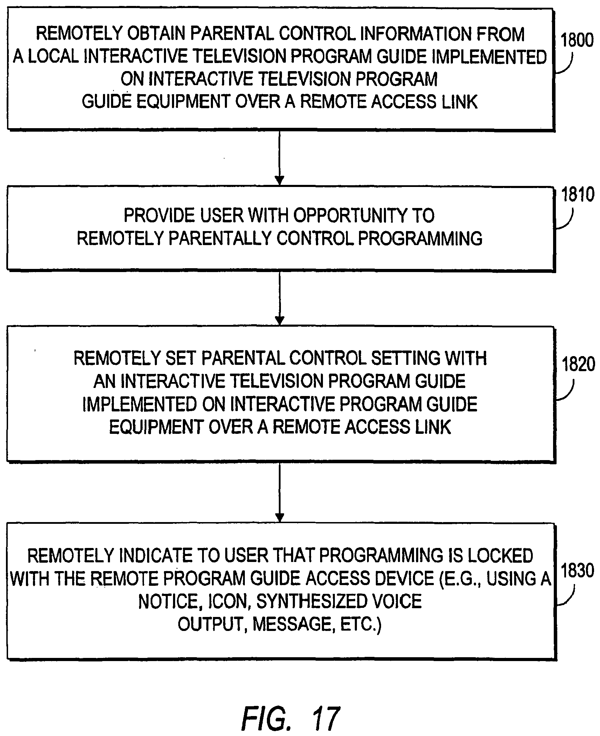

FIG. 17 shows illustrative steps involved in providing a user with remote access to the parental control features of the local interactive television program guide implemented on interactive television program guide equipment 17. At step 1800, parental control information is remotely obtained. This may occur, for example, on startup, periodically, continuously, on demand in response to a suitable user command, or using any other suitable scheme.

The remote access program guide may provide the user with the opportunity to parentally control programming (e.g., by program, channel, theme, time, etc.) in any suitable manner (step 1810). At step 1820, the remote access program guide remotely sets a parental control setting with the interactive television program guide via remote access link 19. Remote program guide access device 24 may use, for example, one or more access communications sent over remote access link 19 to exchange the parental control settings with interactive television program guide 17.

Programming may be locked locally by a user via user television equipment 22, or may have been locked remotely by the remote access program guide. The remote access program guide may indicate to a user that programming is locked (e.g., by program, channel, theme, etc.) with remote program guide access device 24 at step 1830. Remote program guide access device 24 may use, for example, a notice, icon, synthesized voice output, message, or any other suitable indicator.

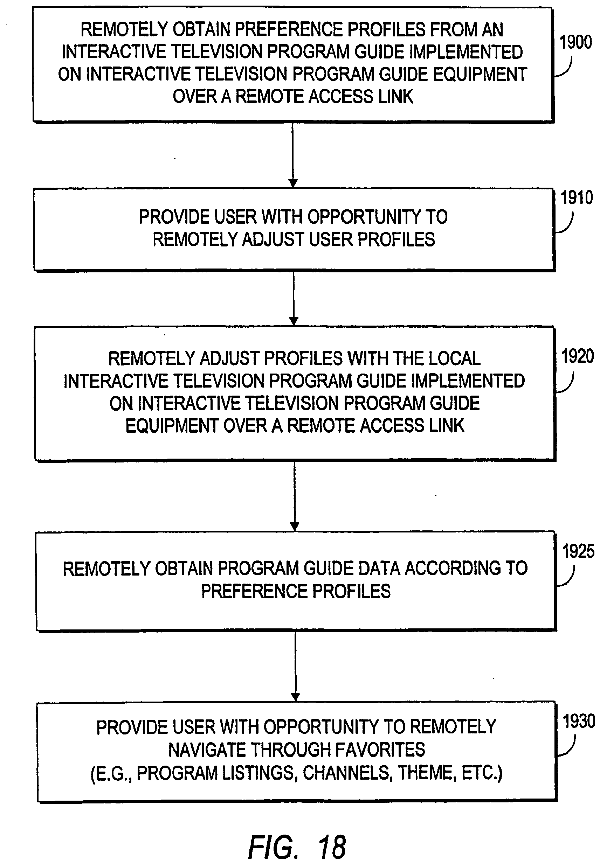

FIG. 18 shows illustrative steps involved in providing a user with remote access to the favorites and user profile functions of the interactive television program guide implemented on interactive television program guide equipment 17. At step 1900, user preference profiles are remotely obtained from the local interactive television program guide by the remote access interactive television program guide via remote access link 19. The information or profiles may be obtained, for example, on startup, periodically, continuously, on demand in response to a suitable user command, or using any other suitable scheme.

The remote access program guide may provide the user with the opportunity remotely adjust user profiles (step 1910). The user may, for example, add or delete favorite channels, themes, indicate likes or dislikes, etc. At step 1920, the remote access program guide remotely adjusts user profiles with the local interactive television program guide. This may be accomplished by, for example, remote program access device 24 exchanging one or more access communications with interactive television guide equipment 17 via remote access link 19. The one or more access communications may indicate one or more user profiles or favorites information. At step 1925, the remote program guide obtains program guide data according to the preference profiles.

At step 1930, remote program guide access device 24 may provide the user with the opportunity to remotely navigate through favorites. Remote program guide access device 24 may, for example, have obtained program listings information (step 1600, FIG. 15), sorted the information according to the favorites information, and displayed only listings for a favorite channel or theme. Alternatively, remote program guide access device 24 may, for example, display television program listings in a grid, table, or list while highlighting favorite channels. A user may be provided with the opportunity to "jump" between favorite listings or channels by issuing an appropriate command using user interface 52.

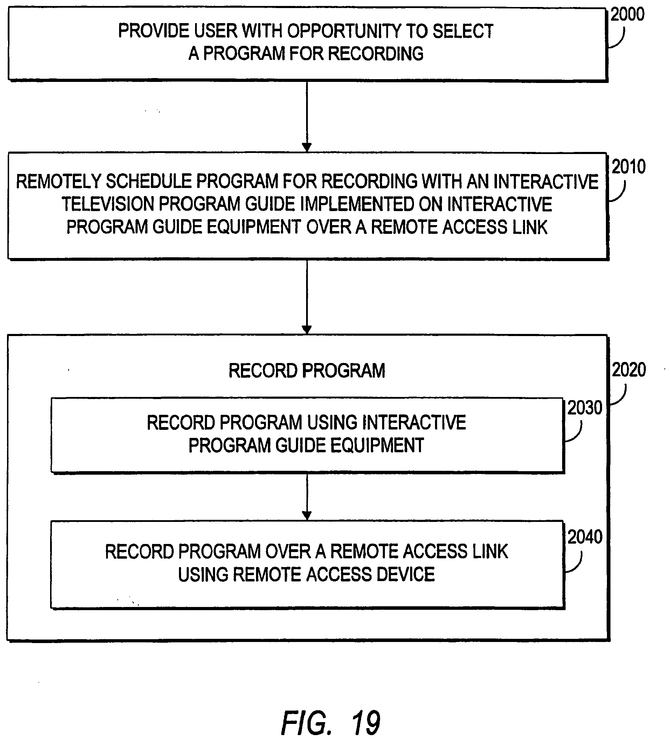

FIG. 19 shows illustrative steps involved in providing a user with remote access to program recording. At step 2000, the remote access program guide provides the user with the opportunity to select a program for recording. This opportunity may be provided in response to the user indicating a desire to record programming by, for example, selecting a program listing (step 1640, FIG. 15) and issuing a suitable command. In response, the remote access program guide remotely schedules the program for recording with the local interactive television program guide implemented on interactive television program guide equipment 17 (step 2000). Remote program guide access device 24 may exchange, for example, one or more access communications with interactive television program guide equipment 17 that are sent over remote access link 19.

At an appropriate time, the program is recorded (step 2020). As indicated by substeps 2030 and 2040, the program may be recorded by the local interactive program guide on interactive television program guide equipment 17 (e.g., digital storage device 31 or secondary storage device 32 of user television equipment 22 (FIG. 3), or on program guide server 25, or may be recorded by remote program guide access device 24 on storage 56 (FIG. 5) or program guide server 25. If the program is recorded by remote program guide access device 24, the programming may, for example, be digitized and transmitted as a MPEG-2 data stream over remote access link 19 using access communications.

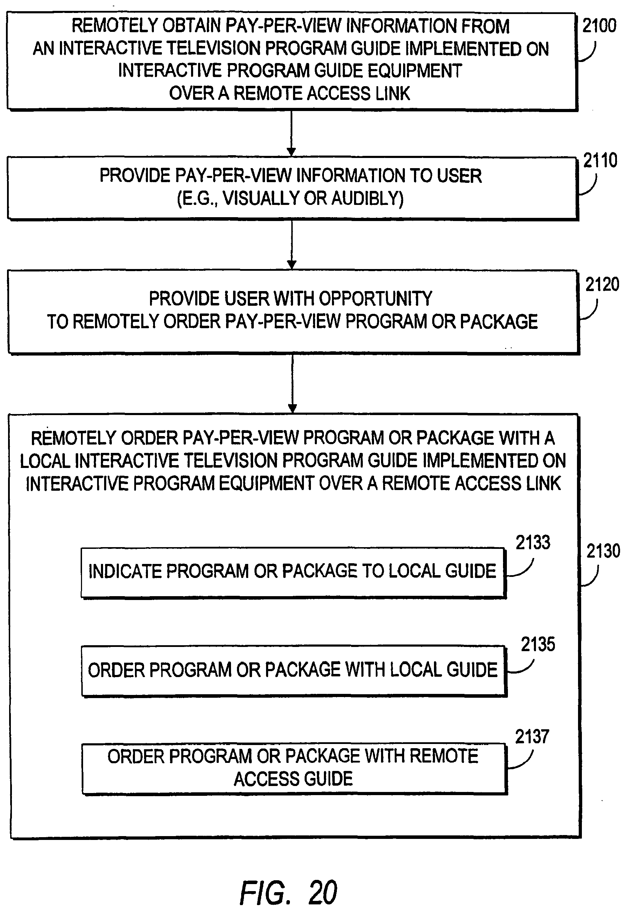

FIG. 20 shows illustrative steps involved in providing the user with remote access to remotely order pay-per-view programs and packages using the local interactive television program guide implemented on interactive television program guide equipment 17. At step 2100, the remote access program guide obtains pay-per-view information (e.g., price, ordering information, time, event code, selections in a package, etc.), from the interactive program guide implemented on interactive television program guide equipment 17 via remote access link 19. The pay-per-view information may be obtained on startup, periodically, continuously, on demand in response to a suitable user command, or using any other suitable scheme. The pay-per-view information is provided to the user by the remote access program guide using user interface 52 of remote program guide access device 24 in any suitable fashion (step 2110).

At step 2120, the remote access program guide provides the user with the opportunity to remotely order a pay-per-view program or package. This opportunity may be provided, for example, in response to the user selecting a pay-per-view program listing or package listing (e.g., step 1640, FIG. 15). At step 2130, the remote access program guide remotely orders the pay-per-view program or package by indicating the program or package to the local interactive television program guide by, for example, exchanging one or more access communications over remote access link 19 (step 2133). The access communications may contain the pay-per-view information for the selected pay-per-view program or package. The local guide may order the program or package at step 2135. Alternately, the remote access program guide may order the pay-per-view program (step 2137).

The way in which the remote access program guide orders the pay-per-view program using the local interactive television program guide may depend on the configuration of the system. If the system is configured as shown in FIGS. 2a and 2c, the remote access program guide may, for example, provide the pay-per-view information to the interactive television program guide implemented at least partially on user television equipment 22. The interactive television program guide may, in turn, order the pay-per-view program with television distribution facility 16. If the system is configured as shown in FIGS. 2b and 2d, the remote access program guide may, for example, provide the pay-per-view information to the interactive television program guide via separate communications device 27. If the system is configured as shown in FIGS. 6a and 6b, the remote access program guide may provide the pay-per-view information via Internet service system 61.

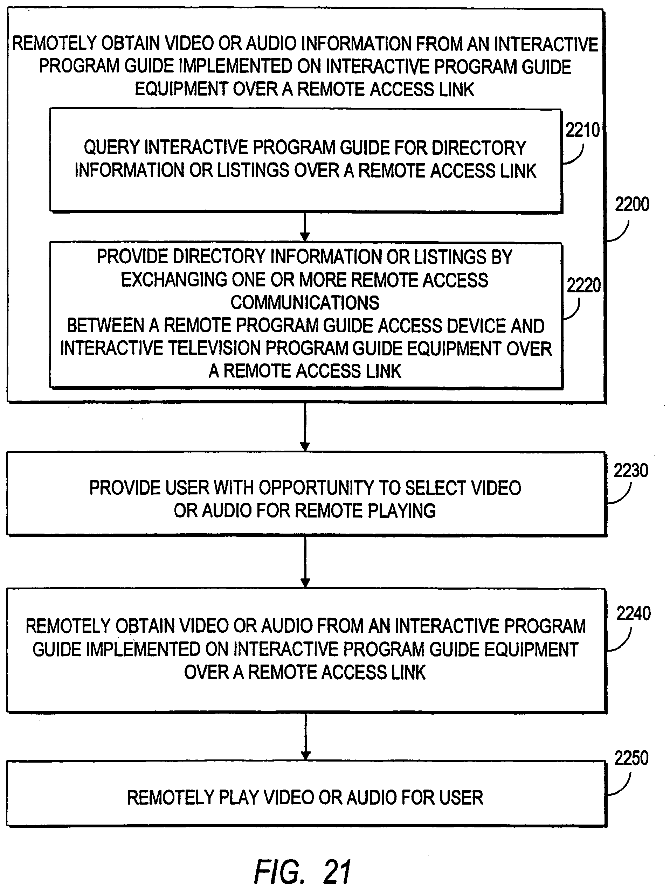

FIG. 21 shows illustrative steps involved in providing a user with access to remotely-played video or audio. At step 2200, the remote access program guide may obtain video or audio information from the interactive television program guide implemented on interactive television program guide equipment 17 via remote access link 19. This may occur, for example, in response to the user selecting a video or audio listing displayed by remote program guide access device 24.

Substeps 2210 and 2220 show illustrative steps involved in obtaining directory information used in providing a user with audio and video information. The remote access program guide may query the local interactive television program guide implemented on interactive television program guide equipment 17 for directory information using one or more access communications that are sent over remote access link 19 (step 2210). The directory information may be contained, for example, in a media library directory for a media library that is stored on user television equipment 22, or by television distribution facility 16. The directory information may be provided back to the remote access program guide by exchanging one or more remote access communications between interactive television program guide equipment 17 and remote program guide access device 24 over remote access link 19, as is indicated by substep 2220. Step 2210 may be skipped and step 2220 performed when, for example, directory information or listings are provided to the remote access guide ahead of time.

At step 2230, the remote access program guide may provide the user with the opportunity to select a video or audio for remote playing. The user may select a video or audio by, for example, selecting a listing that is indicated to the user by user interface 52. The user may be provided with an opportunity to play a program in real-time via the local and remote guides, or to play a stored program. In response, the remote access program guide may obtain the selected video or audio from the local interactive television program guide using access communications that are sent over remote access link 19. The access communications may contain the video or audio in a suitable analog or digital format. At step 2250, remote program guide access device 24 remotely plays the video or audio for the user using user interface 52. Selected video may be displayed, for example, on a suitable monitor, LCD, or other suitable display device. Selected audio may be played for the user using any suitable speaker. Audio may, for example, be played by a car stereo if remote program guide access device 24 is an automobile PC.

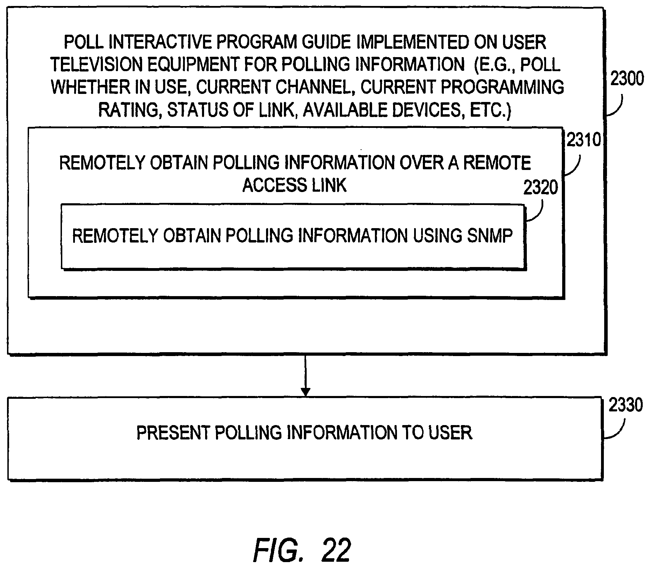

FIG. 22 shows illustrative steps involved in providing the user with the opportunity to remotely poll the local interactive television program guide implemented on interactive television program guide equipment 17. At step 2300, the remote access program guide may poll the interactive television program guide for polling information. The polling information may indicate, for example, whether user television equipment 22 is in use, the current channel user television equipment 22 is tuned to, the current programming rating, current program title, the status of remote access link 19 or communications paths 20, the available devices of user television equipment 22, or any other status related information.

Step 2300 may include substeps 2310 and 2320 for obtaining the polling information. At substep 2310, remote program guide access device 24 may obtain the polling information. Polling information may be obtained on startup, periodically, continuously, on demand in response to a suitable user command, or using any other suitable scheme. More particularly, status information may be obtained using SNMP (substep 2320), if desired. If SNMP is used to obtain polling information, for example, the access communications may include commands and protocol data units (PDUs). Other suitable network management protocols may also be used. At step 2330, remote program guide access device 24 may present the polling information to the user in any suitable method. The polling information may be displayed, for example, in a status display screen such as status display screen 200 of FIG. 11. Polling information may, for example, be output to the user via synthesized voice outputs that are played using a speaker and voice synthesis hardware and software.

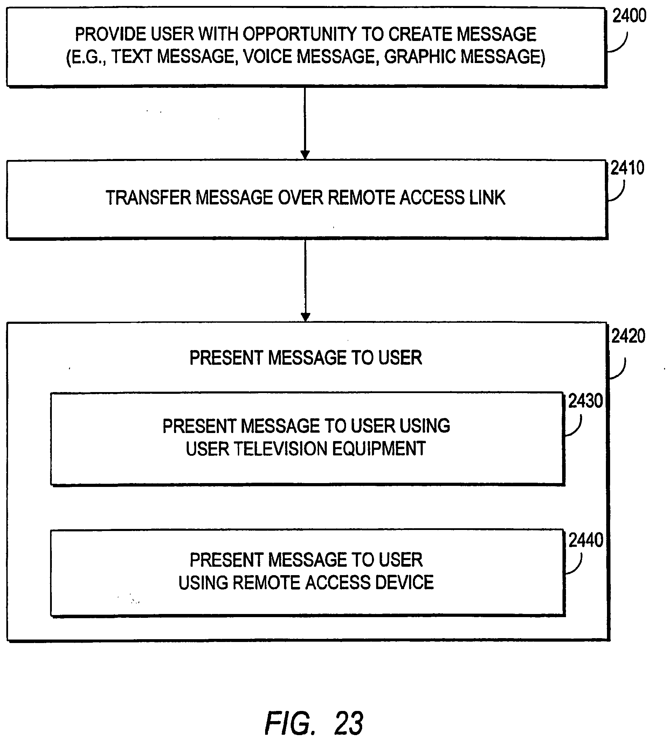

FIG. 23 shows illustrative steps involved in providing the user with the opportunity to create messages and send them between the local interactive television program guide implemented on interactive television program guide equipment 17 and the remote access program guide. At step 2400, the user is provided with the opportunity to create a message. The user may create the message with the local interactive television program guide using, for example, user interface 46 of user television equipment 22 (FIG. 4), or the user may create the message using user interface 52 of remote program guide access device 24.

The message may include any suitable text, graphics, or audio. The user may, for example, speak an audio message into a microphone. The audio message may be digitized and stored in an access communication for transfer over remote access link 19. Alternatively, the user may input a text message using a suitable text input device (e.g., a keyboard). However the message is created and whatever its content, the message is transferred over remote access link 19 using one or more access communications. The message may be transferred from the interactive television program guide to the remote access program guide, or from the remote access program guide to the local interactive television program guide, depending on where the message was created and its intended destination. At step 2410, the message may be presented to the user by user television equipment 22 (e.g., substep 2430), or by remote program guide access device 24 (e.g., substep 2440).

The discussion thus far has focused on implementing the invention with an interactive television program guide. The invention may also be applied to non-program-guide interactive television applications. Local non-program-guide applications run on user television equipment such as a set-top box and corresponding remote access non-program-guide application may run on a remote access device. Interactive television applications may be stand-alone applications, portions of an operating system, or any suitable combination thereof.

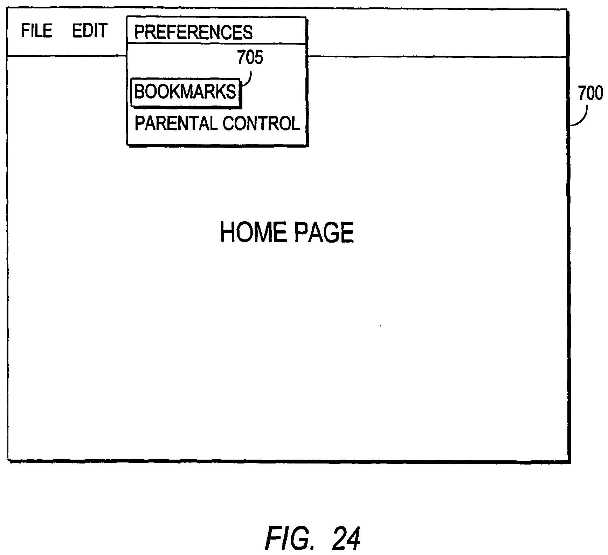

One non-program-guide application that may be implemented on a set-top box in accordance with the present invention is an Internet browser. An Internet browser may have settings such as bookmarks, parental control settings, and general preferences that control how the browser functions. As shown in FIG. 24, a remote access device may provide the user with access to a browser application by displaying, for example, browser screen 700 of a remote access browser application. Browser screen 799 may have a bookmark option 705. A user may, for example, select bookmark option 705 and add a bookmark (i.e., a record of the address of the current web site that can be used to access the site). After the user adds a bookmark with a remote access Internet browser, the remote access Internet browser may exchange one or more access communications with a local Internet browser to add the bookmark to the local browser.

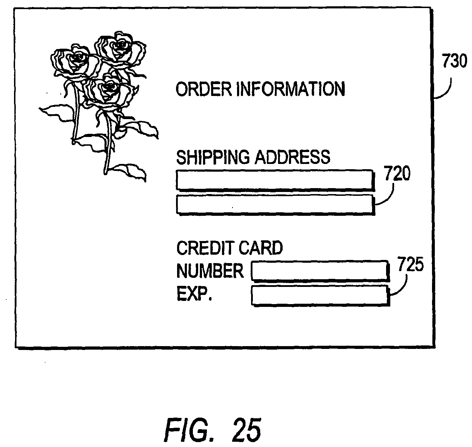

Another application that may be implemented or a set-top box in accordance with the present invention is a shopping application. A shopping application may have settings such as a default shipping address and credit card number. As shown in FIG. 25, a remote access shopping application screen 730 may have settings such as a shipping address 720, and credit card number 725. A user may, for example, add a shipping address and credit card information. After a user adds shipping and credit card information with the remote access shopping application, the remote access application may exchange one or more access communications with a local shopping application to provide the information to the local application.

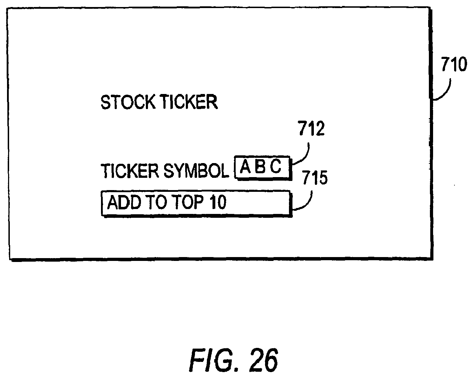

Another non-program-guide application that may be implemented on a set-top box and accessed via a remote access device in accordance with the present invention is a stock ticker. A stock ticker may have settings such as settings indicating the top ten stocks in which the user is interested. As shown in FIG. 26, a remote access device may display a remote access stock ticker settings screen 710. Stock ticker settings screen 710 may have, for example, ticker symbol 712 and a top ten stocks option 715. A user may, for example, add a top stock. By exchanging one or more access communications, the remote access stock ticker application can make the top ten stock settings effective on a local stock ticker application.

A chat application may be implemented on a set top box. Chat applications are services that allow users to exchange chat messages with other users in real time. A chat application may be implemented as a stand-alone chat application or as part of another application such as a program guide application. Chat applications that may be implemented on user television equipment are described in DeWeese et al. U.S. patent application Serial No. _, filed concurrently herewith (Attorney Docket No. UV-101), which is hereby incorporated by reference herein in its entirety. A user may remotely adjust settings associated with a chat application such as the size of a chat window, an address book, or whether to filter potentially offensive messages. After the user adjusts chat settings with a remote access chat application running on a remote access device, the remote access chat application may remotely adjust the settings of a local chat application by, for example, exchanging one or more access communications with the local chat application over a remote access link.

If desired, the settings of an e-mail application running on a set-top box may be adjusted remotely. Set-top based messaging systems are described, for example, in concurrently filed McKissicket al. U. S. patent application Serial No. ∼∼∼∼ (Attorney Docket No.UV-128), which is hereby incorporated by reference herein in its entirety.

Users may, for example, remotely add to or change an address book. When the user adjusts e-mail settings with a remote access e-mail application running on a remote access device, the remote access e-mail application may remotely adjust the settings of a local e-mail application by, for example, exchanging one ore more access communications with the local e-mail application over a remote access link.

For the avoidance of doubt, this document also includes a disclosure of the following:
1. A system for providing a user with remote access to an interactive television program guide over a remote access link, comprising:
   interactive television program guide equipment on which a local interactive television program guide that performs at least one program guide function is implemented, wherein the interactive television program guide equipment includes user television equipment; and
   a remote program guide access device that is connected to the interactive television program guide equipment by the remote access link and on which a remote access interactive television program guide is implemented, wherein the remote program guide access device is configured to provide the user with an opportunity to remotely set over the remote access link at least one program guide setting that is used by the local interactive television program guide to perform the at least one program guide function.
2. The system defined in recital 1 wherein the remote program access device and the interactive television program guide equipment are configured to allow the user to remotely obtain parental control information from the local interactive television program guide over the remote access link.
3. The system defined in recital 2 wherein:
   the remote program guide access device and the interactive television program guide equipment are configured to allow the user to remotely set a parental control setting over the remote access link; and
   the local interactive television program guide is further configured to lock a program based on the parental control setting.
4. The system defined in recital 3 wherein the remote program guide access device is further configured to indicate to the user that the program is locked with the remote access interactive television program guide.
5. The system defined in recital 1 wherein the remote program guide access device and the interactive television program guide equipment are configured to allow the user to remotely obtain favorites information from the local interactive television program guide over the remote access link.
6. The system defined in recital 5 wherein the remote program guide access device and the interactive television program guide equipment are configured to allow the user to remotely set a favorite setting over the remote access link.
7. The system defined in recital 5 wherein the remote program guide access device and the interactive television program guide equipment are configured to allow the user to remotely navigate through favorites over the remote access link.
8. The system defined in recital 1 wherein the remote program guide access device is further configured to poll the local interactive television program guide and to remotely obtain polling information from the local interactive television program guide over the remote access link.
9. The system defined in recital 8 wherein the remote program guide access device is further configured to present the polling information to the user with the remote access interactive television program guide.
10. The system defined in recital 8 wherein the remote program guide access device is further configured to remotely obtain polling information from the local interactive television program guide using a simple network management protocol.
11. The system defined in recital 1 wherein:
   the remote access link is a bidirectional link; and
   the remote program guide access device and the interactive television program guide equipment are configured to allow the user to set at least one program guide setting over the remote access link by exchanging access communications.
12. The system defined in recital 11 wherein the access communications comprise requests.
13. The system defined in recital 11 wherein the access communications comprise commands.
14. The system defined in recital 11 wherein the access communications comprise messages.
15. The system defined in recital 11 wherein the access communications comprise remote procedure calls.
16. The system defined in recital 11 wherein the access communications comprise object-based communications.
17. The system defined in recital 11 wherein the access communications comprise markup language documents.
18. The system defined in recital 1 wherein:
   the local interactive television program guide provides the user with an opportunity to create a message using the user television equipment and to transfer the message to the remote program guide access device over the remote access link; and
   the remote program guide access device is continued to access provide the message to the user with the remote access interactive television program guide.
19. The system defined in recital 1 wherein:
   the user television equipment comprises a communications device connected to the remote access link; and
   the remote program guide access device is further configured to provide the user with an opportunity to set the at least one program guide setting via the communications device with the remote access interactive television program guide.
20. The system defined in recital 1 wherein:
   the interactive television program guide equipment comprises a communications device at a television distribution facility connected to the remote access link; and
   the remote program guide access device is further configured to provide the user with an opportunity to set the at least one program guide setting via the communications device with the remote access interactive television program guide.
21. The system defined in recital 1 wherein:
   the interactive television program guide equipment comprises a communications device connected to a program guide server at a television distribution facility; and
   the remote program guide access device is further configured to provide the user with an opportunity to set the at least one program guide setting via the communications device and the program guide server with the remote access interactive television program guide.
22. The system defined in recital 1 wherein:
   the interactive television program guide equipment comprises an Internet service system connected to program guide distribution equipment located at a television distribution facility; and
   the remote program guide access device is further configured to provide the user with an opportunity to set the at least one program guide setting via the Internet service system and the program guide distribution equipment with the remote access interactive television program guide. 2.
23. The system defined in recital 1 wherein:
   the interactive television program guide equipment comprises an Internet service system connected to a program guide server located at a television distribution facility; and
   the remote program guide access device is further configured to provide the user with an opportunity to set the at least one program guide setting via the Internet service system and the program guide server with the remote access interactive television program guide.
24. The system defined in recital 1 wherein:
   the remote program guide access device is configured to provide the user with an opportunity to create a message with the remote access interactive television program guide and to transfer the message to the local interactive television program guide using the remote access link; and
   the interactive television program guide equipment is further configured to present the message to the user with the local interactive television program guide.
25. The system defined in recital 1 wherein the remote access interactive television program guide is a remote client version of the local interactive television program guide.
26. The system defined in recital 1 wherein the remote program guide access device is further configured to communicate with the local interactive television program guide over the remote access link using terminal emulation.
27. The system defined in recital 1 wherein the remote access link comprises a wireless link.
28. The system defined in recital 1 wherein the remote access interactive television program guide and the local interactive television program guide are different interactive television program guides.
29. A system for providing a user with an opportunity to schedule programming reminders over a remote access link, comprising:
   interactive television program guide equipment on which a local interactive television program guide is implemented, wherein the interactive television program guide equipment includes user television equipment; and
   a remote program guide access device that is connected to the interactive television program guide equipment by the remote access link and on which a remote access interactive television program guide is implemented, wherein the remote program guide access device is configured to:
      provide the user with an opportunity to remotely select a television program for which a programming reminder is to be scheduled; and
      to remotely schedule the programming reminder over the remote access link with the local interactive television program guide.
30. The system defined in recital 29 wherein:
   the remote program guide access device and the interactive television program guide equipment are configured to allow the user to remotely schedule the programming reminder with the local interactive television program guide over the remote access link; and
   the local interactive television program guide generates the programming reminder for the program.
31. The system defined in recital 30 wherein the local interactive television program guide generates the programming reminder for the program by sending an e-mail message to the user.
32. The system defined in recital 30 wherein:
   the interactive television program guide equipment comprises a paging transmitter; and
   the local interactive television program guide generates the programming reminder by paging the user with a page that is transmitted to the user by the paging transmitter.
33. The system defined in recital 30 wherein the interactive television program guide is further configured to generate the reminder with the user television equipment.
34. The system defined in recital 29 wherein the remote program guide access device is further configured to store the programming reminder set by the user and to generate the programming reminder with the remote access interactive television program guide.
35. A system for providing a user with an opportunity to schedule programming reminders over a remote access link, comprising:
   a local interactive television program guide equipment on which a local interactive television program guide is implemented, wherein the interactive television program guide equipment includes user television equipment ; and
   a remote program guide access device that is connected to the interactive television program guide equipment by the remote access link and on which a remote access interactive television program guide is implemented, wherein the local interactive television program guide is further configured to:
      provide the user with an opportunity to select a television program for which a programming reminder is to be scheduled; and
      to schedule the programming reminder over the remote access link with the remote access interactive television program guide.
36. The system defined in recital 35 wherein:
   the remote program guide access device and the interactive television program guide equipment are configured to allow the user to remotely schedule the programming reminder with the remote access interactive television program guide over the remote access link; and
   the remote access interactive television program guide generates the programming reminder for the program.
37. The system defined in recital 35 wherein the remote access interactive television program guide generates the programming reminder for the program by sending an e-mail message to the user.
38. The system defined in recital 35 wherein:
   the remote access program guide equipment comprises a pager ;
   the interactive television program guide equipment comprises a paging transmitter; and
   the local interactive television program guide generates a programming reminder for the selected program by paging the user with a page that is transmitted to the user by the paging transmitter and that is displayed by the pager.
39. A system for providing a user with remote access to program listings information over a remote access link, comprising:
   interactive television program guide equipment on which a local interactive television program guide is implemented, wherein the interactive television program guide equipment includes user television equipment; and
   a remote program guide access device that is connected to the interactive television program guide equipment by the remote access link and on which a remote access interactive television program guide is implemented, wherein the remote program guide access device is configured to obtain program listings information from the local interactive television program guide over the remote access link and to provide the program listings information to the user.
40. A system for remotely recording television programs over a remote access link, comprising:
   interactive television program guide equipment on which a local interactive television program guide is implemented, wherein the interactive television program guide equipment includes user television equipment; and
   a remote program guide access device that is connected to the interactive television program guide equipment by the remote access link and on which a remote access interactive television program guide is implemented, wherein the remote program guide access device is configured to:
      provide the user with an opportunity to remotely select a television program for recording by the remote program guide access device over the remote access link; and
      to remotely record the television program selected by the user over the remote access link with the remote access interactive television program guide; and
      the interactive television program guide equipment is further configured to provide the program to the remote program guide access device over the remote access link with the local interactive television program guide.
41. The system defined in recital 40 wherein the remote program guide access device is further configured to obtain directory information from the local interactive television program guide over the remote access link.
42. The system defined in recital 40 wherein the remote program guide access device is further configured to obtain video information from the local interactive television program guide over the remote access link.
43. The system defined in recital 40 wherein the remote program guide access device is further configured to:
   provide the user with an opportunity to select a video for playback by the remote program guide access device;
   remotely obtain the video selected by the user for playback from the local interactive television program guide over the remote accesslink ; and
   remotely play the video for the user.
44. The system defined in recital 40 wherein the remote program guide access device is further configured to obtain audio information from the local interactive television program guide over the remote access link.
45. The system defined in recital 40 wherein the remote program guide access device is further configured to:
   provide the user with an opportunity to select audio for playback by the remote program guide access device ;
   remotely obtain the audio selected by the user for playback from the local interactive television program guide over the remote access link; and remotely play the audio for the user.
46. A system for recording programs via a remote access link, comprising:
   interactive television program guide equipment on which a local interactive television program guide is implemented, wherein the interactive television program guide equipment includes user television equipment; and
   a remote program guide access device that is connected to the interactive television program guide equipment by the remote access link and on which a remote access interactive television program guide is implemented, wherein the remote program guide access device is configured to provide the user with an opportunity to remotely select a program for recording by a local interactive television program guide implemented on interactive television program guide equipment; and
   the interactive television program guide equipment is further configured to record the television program selected by the user with the interactive television program guide equipment.
47. The system defined in recital 46 wherein the interactive television program guide equipment is configured to record the television program selected by the user on the user television equipment.
48. The system defined in recital 46 wherein the interactive television program guide equipment is configured to record the television program selected by the user at a television distribution facility.
49. A system for remotely playing back programs via a remote access link, comprising:
   interactive television program guide equipment on which a local interactive television program guide is implemented, wherein the interactive television program guide equipment includes user television equipment; and
   a remote program guide access device that is connected to the interactive television program guide equipment by the remote access link and on which a remote access interactive television program guide is implemented, wherein the remote program guide access device is configured to:
      provide the user with an opportunity to remotely select a television program for playing by the remote access device; and
      to play the television program selected by the user using the remote access link; and
      the interactive television program guide equipment is further configured to provide the program to the remote program guide access device over the remote access link with the local interactive television program guide.
50. A system for remotely ordering pay-perview programs with a local interactive television program guide via a remote access link, the system comprising:
   interactive television program guide equipment on which a local interactive television program guide that performs at least one function related to ordering pay-per-view programs is implemented, wherein the interactive television program guide equipment includes user television equipment; and
   a remote program guide access device that is connected to the interactive television program guide equipment by the remote access link and on which a remote access interactive television program guide is implemented, wherein the remote program guide access device is configured to:
      provide the user with an opportunity to order a pay-per-view program with the remote access interactive television program guide; and
      provide the local interactive television program guide with an indication of the ordered-pay-per-view program; and
      the local interactive television program guide performs the at least one function related to ordering pay-per-view programs based on the indication.
51. The system defined in recital 50 wherein the interactive television program guide equipment is further configured to order the pay-per-view program with the local interactive television program guide.
52. The system defined in recital 50 wherein:
   the function related to ordering payper-view programs includes displaying a reminder that the pay-per-view program was missed;
   the user television equipment is configured to display a reminder that the pay-per-view program was missed with the local interactive television program guide.
53. The system defined in recital 50 wherein:
   the function related to ordering payper-view programs includes displaying a reminder that the pay-per-view program is starting; and
   the user television equipment is configured to display a reminder that the pay-per-view program is starting with the local interactive television program guide.
54. A system for providing a user with remote access to functions of an interactive television program guide over an Internet link, the system comprising:
   interactive television program guide equipment on which a local interactive television program guide configured to perform at least one program guide function is implemented;
   an Internet service system configured to provide an on-line guide; a personal computer connected to the
   Internet service system by the Internet link, wherein:
      the personal computer is configured to provide the user with an opportunity to remotely set at least one program guide setting over the Internet link using the on-line guide ;
      the Internet service system is configured to provide the at least one program guide setting to the interactive television program guide equipment; and
      the interactive television program guide is configured to perform the at least one program guide function using the at least one program guide setting.
55. A system for providing a user with remote access to a non-program-guide interactive television application over a remote access link, comprising:
   user television equipment having a settop box on which a non-program-guide interactive television application having at least one function is implemented; and
   a remote access device that is connected to the user television equipment by the remote access link and on which a remote access non-program-guide interactive television application is implemented, wherein the remote access device is configured to provide the user with an opportunity to remotely set over the remote access link at least one non-programguide interactive television application setting that is used by the local non-program-guide interactive television application to perform the at least one function.
56. The system defined in recital 55 wherein the non-program-guide interactive television application implemented on the set-top box is an Internet browser.
57. The system defined in recital 55 wherein the non-program-guide interactive television application implemented on the set-top box is a shopping application.
58. The system defined in recital 55 wherein the non-program-guide interactive television application implemented on the set-top box is a stock ticker.
59. The system defined in recital 55 wherein the non-program-guide interactive television application implemented on the set-top box is a chat application.
60. The system defined in recital 55 wherein the non-program-guide interactive television application implemented on the set-top box is an e-mail application.
61. A method for providing a user with remote access to an interactive television program guide over a remote access link, the method comprising the steps of:
   providing the user with an opportunity to set at least one program guide setting using a remote access interactive television program guide implemented on a remote program guide access device;
   providing the at least one program guide setting from the remote program guide access device to interactive television program guide equipment on which a local interactive television program guide is implemented via the remote access link; and
   performing a program guide function with the local interactive television program guide based on the at least one program guide setting.
62. The method defined in recital 61 further comprising the step of providing the user with an opportunity to remotely obtain parental control information from the local interactive television program guide using the remote access interactive television program guide.
63. The method defined in recital 62 wherein:
   the step of providing the user with an opportunity to set at least one program guide setting comprises providing the user with an opportunity to set a parental control setting using the remote access interactive television program guide; and
   the method further comprises the step of locking a program based on the parental control setting with the local interactive television program guide.
64. The method defined in recital 63 further comprising the step of indicating to the user that the program is locked with the remote access interactive television program guide.
65. The method defined in recital 61 further comprising the step of providing the user with an opportunity to remotely obtain favorites information from the local interactive television program guide using the remote access interactive television program guide.
66. The method defined in recital 61 wherein the step of providing the user with an opportunity to set at least one program guide setting comprises providing the user with an opportunity to remotely set a favorite setting using the remote access interactive television program guide.
67. The method defined in recital 61 further comprising the step of providing the user with an opportunity to remotely navigate through favorites using the remote access interactive television program guide.
68. The method defined in recital 61 further comprising the steps of:
   polling the local interactive television program guide with the remote access interactive television program guide; and
   remotely obtaining polling information from the local interactive television program guide via the remote access link with the remote access interactive television program guide.
69. The method defined in recital 61 further comprising the step of presenting the polling information to the user with the remote program guide access device.
70. The method defined in recital 68 wherein the step of remotely obtaining polling information from the local interactive television program guide comprises remotely obtaining polling information using a simple network management protocol.
71. The method defined in recital 61 wherein:
   the remote access link is a bidirectional link; and
   the step of providing the user with an opportunity to set at least one program guide setting comprises exchanging access communications between the remote access interactive television program guide and the local interactive television program guide.
72. The method defined in recital 61 wherein:
   the remote access link is a bidirectional link, and
   the step of providing the user with an opportunity to set at least one program guide setting comprises exchanging requests between the remote access interactive television program guide and the local interactive television program guide.
73. The method defined in recital 61 wherein:
   the remote access link is a bidirectional link; and
   the step of providing the user with an opportunity to set at least one program guide setting comprises exchanging commands between the remote access interactive television program guide and the local interactive television program guide.
74. The method defined in recital 61 wherein:
   the remote access link is a bidirectional link; and
   the step of providing the user with an opportunity to set at least one program guide setting comprises exchanging messages between the remote access interactive television program guide and the local interactive television program guide.
75. The method defined in recital 61 wherein:
   the remote access link is a bidirectional link; and
   the step of providing the user with an opportunity to set at least one program guide setting comprises exchanging remote procedure calls between the remote access interactive television program guide and the local interactive television program guide.
76. The method defined in recital 61 wherein:
   the remote access link is a bidirectional link; and
   the step of providing the user with an opportunity to set at least one program guide setting comprises exchanging object-based communications between the remote access interactive television program guide and the local interactive television program guide.
77. The method defined in recital 61 wherein :
   the remote access link is a bidirectional link; and
   the step of providing the user with an opportunity to set at least one program guide setting comprises providing the user with an opportunity to set at least one program guide setting over the remote access link by exchanging markup language documents between the remote access interactive television program guide and the local interactive television program guide.
78. The method defined in recital 61 further comprising the steps of:
   providing the user with an opportunity to create a message using the local interactive television program guide;
   transferring the message to the remote program guide access device using the remote access link; and
   providing the message to the user with the remote access interactive television program guide.
79. The method defined in recital 61 wherein the step of providing the at least one program guide setting from the remote program guide access device to the interactive television program guide equipment via the remote access link comprises providing the at least one program guide setting from the remote program guide access device to the interactive television program guide equipment via a communications device in the user television equipment connected to the remote access link.
80. The method defined in recital 61 wherein the step of providing the at least one program guide setting from the remote program guide access device to the int the remote access link comprises providing the at least one program guide setting from the remote program guide access device to the interactive television program guide equipment via a communications device at a television distribution facility connected to the remote access link.
81. The method defined in recital 61 wherein the step of providing the at least one program guide setting from the remote program guide access device to the interactive television program guide equipment via the remote access link comprises providing the at least one program guide setting from the remote program guide access device to the interactive television program guide equipment via a communications device connected to a program guide server at a television distribution facility.
82. The method defined in recital 61 wherein the step of providing the at least one program guide setting from the remote program guide access device to the interactive television program guide equipment via the remote access link comprises providing the at least one program guide setting from the remote program guide access device to the interactive television program guide equipment via an Internet service system connected to program guide distribution equipment located at a television distribution facility.
83. The method defined in recital 61 wherein the step of providing the at least one program guide setting from the remote program guide access device to the interactive television program guide equipment via the remote access link comprises providing the at least one program guide setting from the remote program guide access device to the interactive television program guide equipment via an Internet service system connected to a program guide server located at a television distribution facility.
84. The method defined in recital 61 further comprising the steps of:
   providing the user with an opportunity to create a message using the remote access interactive television program guide;
   transferring the message to the interactive television program guide equipment using the remote access link; and
   providing the message to the user with the local interactive television program guide.
85. The method defined in recital 61 wherein:
   the remote access interactive television program guide is a remote client version of the local interactive television program guide; and
   the step of providing the user with an opportunity to set at least one program guide setting comprises providing the user with an opportunity to set at least one program guide setting using the remote client version of the local interactive television program guide.
86. The method defined in recital 61 wherein the step of providing the at least one program guide setting from the remote program guide access device to the interactive television program guide equipment comprises providing the at least one program guide setting to the interactive television program guide equipment using terminal emulation.
87. The method defined in recital 61 wherein:
   the remote access link comprises a wireless link; and
   the step of providing the at least one program guide setting from the remote program guide access device to the interactive television program guide equipment comprises providing the at least one program guide setting to the interactive television program guide equipment using the wireless link.
88. The method defined in recital 61 wherein:
   the remote access interactive television program guide is a first interactive television program guide;
   the local interactive television program guide is a second interactive television program guide that is different from the first interactive television program guide; and
   the step of providing the at least one program guide setting from the remote program guide access device to the interactive television program guide equipment comprises providing the at least one program guide setting from the first interactive television program guide to the second interactive television program guide.
89. A method for remotely scheduling programming reminders over a remote access link, the method comprising the steps of:
   providing a user with an opportunity to remotely select a television program for which a programming reminder is to be scheduled with a remote access interactive television program guide implemented on a remote program guide access device; and
   generating the programming reminder with a local interactive television program guide implemented on interactive television program guide equipment having user television equipment.
90. The method defined in recital 89 further comprising the step of remotely scheduling the programming reminder over the remote access link with the local interactive television program guide using the remote access interactive television program guide.
91. The method defined in recital 89 wherein the step of generating the programming reminder for the program with the local interactive television program guide comprises generating the programming reminder for the program by sending an e-mail message to the user.
92. The method defined in recital 89 wherein the step of generating the programming reminder for the program with the local interactive television program guide comprises generating the programming reminder by paging the user with a page that is transmitted to the user by a paging transmitter.
93. The method defined in recital 89 further comprising:
   storing the programming reminder with the remote program guide access device; and
   generating the programming reminder with the remote access interactive television program guide.
94. The method defined in recital 89 wherein the step of generating the programming reminder for the program with the local interactive television program guide comprises displaying the reminder with the user television equipment.
95. A method for remotely scheduling programming reminders over a remote access link, the method comprising the steps of:
   providing a user with an opportunity to select a television program for which a programming reminder is to be scheduled with a local interactive television program guide, wherein the interactive television program guide is implemented on interactive television program guide equipment having user television equipment; and
   generating the programming reminder with a remote access program guide implemented or a remote program guide access device that is connected to the interactive television program guide equipment by the remote access link.
96. The method defined in recital 95 wherein the step of generating the programming reminder comprises generating an e-mail message having the programming reminder using the remote access program guide.
97. The method defined in recital 95 wherein the step of generating the programming reminder comprises generating the reminder on a pager with the remote access interactive television program guide.
98. A method for providing a user with remote access to program listings information over a remote access link, the method comprising the steps of:
   obtaining program listings information with a remote access interactive television program guide implemented on a remote program guide access device from a local interactive television program guide implemented on interactive television program guide equipment over the remote access link; and
   providing the program listings information to the user with the remote access interactive television program guide.
99. A method for remotely recording a television program over a remote access link, the method comprising the steps of:
   providing the user with an opportunity to remotely select a television program for recording over the remote access link by a remote access interactive television program guide implemented on a remote program guide access device from a local interactive television program guide implemented on interactive television program guide equipment; and
   remotely recording the television program selected by the user over the remote access link with the remote program guide access device.
100. The method defined in recital 99 further comprising the step of obtaining directory information from the local interactive television program guide over the remote access link with the remote access interactive television program guide.
101. The method defined in recital 99 further comprising the step of obtaining video information from the local interactive television program guide over the remote access link with the remote access interactive television program guide.
102. The method defined in recital 99 further comprising the steps of:
   providing the user with an opportunity to select a video for playback by the remote program guide access device with the remote access interactive television program guide;
   remotely obtaining the video selected by the user for playback from the local interactive television program guide over the remote access link with the remote program guide access device; and
   remotely playing the video for the user with the remote program guide access device.
103. The method defined in recital 99 further comprising the step of obtaining audio information from the local interactive television program guide over the remote access link with the remote access interactive television program guide.
104. The method defined in recital 99 further comprising the steps of:
   providing the user with an opportunity to select audio for playback by the remote program guide access device with the remote access interactive television program guide;
   remotely obtaining the audio selected by the user for playback from the local interactive television program guide over the remote access link using the remote program guide access device; and
   remotely playing the audio for the user with the remote program guide access device.
105. A method for recording programs via a remote access link, the method comprising the steps of:
   providing the user with an opportunity to select a program for recording by a local interactive television program guide implemented on interactive television program guide equipment with a remote access interactive television program guide implemented on a remote program guide access device; and
   recording the program selected by the user with the local interactive television program guide on the interactive television program guide equipment.
106. The method defined in recital 105 wherein recording the program selected by the user with the local interactive television program guide on the interactive television program guide equipment comprises recording the program on the user television equipment.
107. The method defined in recital 105 wherein recording the program selected by the user with the local interactive television program guide on the interactive television program guide equipment comprises recording the program at a television distribution facility.
108. A method for remotely playing programs over a remote access link, the method comprising the steps of:
   providing the user with an opportunity to remotely select a television program for playing with a remote access interactive television program guide implemented on a remote program guide access device;
   obtaining the television program from a local interactive television program guide implemented on interactive television program guide equipment with the remote access television program guide; and
   remotely playing the television program with the remote program guide access device.
109. A method for remotely ordering pay-perview programs with a local interactive television program guide via a remote access link, the method comprising the steps of:
   providing the user with an opportunity to order a pay-per-view program with a remote access interactive television program guide implemented on a remote program guide access device; and
   providing a local interactive television program guide implemented on interactive television program guide equipment with an indication of the ordered-pay-per-view program, wherein the interactive television program guide equipment is connected to the remote program guide access device via the remote access link, and wherein the interactive television program guide equipment comprises user television equipment; and
   performing the at least one function related to ordering pay-per-view programs with the local interactive television program guide based on the indication.
110. The method defined in recital 109 further comprising the step of the pay-per-view program with the local interactive television program guide.
111. The method defined in recital 109 wherein the step of performing the at least one function related to ordering pay-per-view programs with the local interactive television program guide based on the indication comprises displaying a reminder that the pay-per-view program was missed on the user television equipment.
112. The method defined in recital 109 wherein step of performing the at least one function related to ordering pay-per-view programs with the local interactive television program guide based on the indication comprises displaying a reminder that the pay-per-view program is starting on the user television equipment.
113. A method for providing a user with remote access to functions of an interactive television program guide over an Internet link, the method comprising the steps of:
   providing the user with an opportunity to remotely set at least one program guide setting over the Internet link using a remote access interactive television program guide implemented on a personal computer connected to an Internet service system by the
   Internetlink ;
   providing the at least one program guide setting over the Internet link to a local interactive television program guide implemented on interactive television program guide equipment; and
   performing the at least one program guide function with the local interactive television program guide using the at least one program guide setting.
114. A system for providing a user with remote access to functions of an interactive television program guide over a remote access link, the system comprising:
   means for providing the user with an opportunity to set at least one program guide setting using a remote access interactive television program guide implemented on a remote program guide access device;
   means for providing the at least one program guide setting from the remote program guide access device to interactive television program guide equipment on which a local interactive television program guide is implemented via the remote access link; and
   means for performing a program guide function with the local interactive television program guide based on the at least one program guide setting.
115. The system defined in recital 114 further comprising the means for providing the user with an opportunity to remotely obtain parental control information from the local interactive television program guide using the remote access interactive television program guide.
116. The system defined in recital 115 wherein:
   the means for providing the user with an opportunity to set at least one program guide setting comprises means for providing the user with an opportunity to set a parental control setting using the remote access interactive television program guide; and
   the system further comprises means for locking a program based on the parental control setting with the local interactive television program guide.
117. The system defined in recital 116 further comprising means for indicating to the user that the program is locked with the remote access interactive television program guide.
118. The system defined in recital 114 further comprising means for providing the user with an opportunity to remotely obtain favorites information from the local interactive television program guide using the remote access interactive television program guide.
119. The system defined in recital 114 wherein the means for providing the user with an opportunity to set at least one program guide setting comprises means for providing the user with an opportunity to remotely set a favorite setting using the remote access interactive television program guide.
120. The system defined in recital 114 further comprising means for providing the user with an opportunity to remotely navigate through favorites using the remote access interactive television program guide.
121. The system defined in recital 114 further comprising:
   means for polling the local interactive television program guide with the remote access interactive television program guide; and
   means for remotely obtaining polling information from the local interactive television program guide via the remote access link with the remote access interactive television program guide.
122. The system defined in recital 121 further comprising means for presenting the polling information to the user with the remote program guide access device.
123. The system defined in recital 121 wherein the means for remotely obtaining polling information from the local interactive television program guide comprises means for remotely obtaining polling information using a simple network management protocol.
124. The system defined in recital 114 wherein:
   the remote access link is a bidirectional link; and
   the means for providing the user with an opportunity to set at least one program guide setting comprises means for exchanging access communications between the remote access interactive television program guide and the local interactive television program guide.
125. The system defined in recital 114 wherein :
   the remote access link is a bidirectional link, and
   the means for providing the user with an opportunity to set at least one program guide setting comprises means for exchanging requests between the remote access interactive television program guide and the local interactive television program guide.
126. The system defined in recital 114 wherein:
   the remote access link is a bidirectional link; and
   the means for providing the user with an opportunity to set at least one program guide setting comprises means for exchanging commands between the remote access interactive television program guide and the local interactive television program guide.
127. The system defined in recital 114 wherein:
   the remote access link is a bidirectional link; and
   the means for providing the user with an opportunity to set at least one program guide setting comprises means for exchanging messages between the remote access interactive television program guide and the local interactive television program guide.
128. The system defined in recital 114 wherein:
   the remote access link is a bidirectional link; and
   the means for providing the user with an opportunity to set at least one program guide setting comprises means for exchanging remote procedure calls between the remote access interactive television program guide and the local interactive television program guide.
129. The system defined in recital 114 wherein:
   the remote access link is a bidirectional link; and
   the means for providing the user with an opportunity to set at least one program guide setting comprises means for exchanging object-based communications between the remote access interactive television program guide and the local interactive television program guide.
130. The system defined in recital 114 wherein:
   the remote access link is a bidirectional link; and
   the means for providing the user with an opportunity to set at least one program guide setting comprises means for exchanging markup language documents between the remote access interactive television program guide and the local interactive television program guide.
131. The system defined in recital 114 further comprising:
   means for providing the user with an opportunity to create a message using the local interactive television program guide;
   means for transferring the message to the remote program guide access device using the remote access link; and
   means for providing the message to the user with the remote access interactive television program guide.
132. The system defined in recital 114 wherein the means for providing the at least one program guide setting from the remote program guide access device to the interactive television program guide equipment via the remote access link comprises means for providing the at least one program guide setting from the remote program guide access device to the interactive television program guide equipment via a communications device in the user television equipment connected to the remote access link.
133. The system defined in recital 114 wherein the means for providing the at least one program guide setting from the remote program guide access device to the interactive television program guide equipment via the remote access link comprises means for providing the at least one program guide setting from the remote program guide access device to the interactive television program guide equipment via a communications device at a television distribution facility connected to the remote access link.
134. The system defined in recital 114 wherein the means for providing the at least one program guide setting from the remote program guide access device to the interactive television program guide equipment via the remote access link comprises means for providing the at least one program guide setting from the remote program guide access device to the interactive television program guide equipment via a communications device connected to a program guide server at a television distribution facility.
135. The system defined in recital 114 wherein the means for providing the at least one program guide setting from the remote program guide access device to the interactive television program guide equipment via the remote access link comprises means for providing the at least one program guide setting from the remote program guide access device to the interactive television program guide equipment via an Internet service system connected to program guide distribution equipment located at a television distribution facility.
136. The system defined in recital 114 wherein the means for providing the at least one program guide setting from the remote program guide access device to the interactive television program guide equipment via the remote access link comprises means for providing the at least one program guide setting from the remote program guide access device to the interactive television program guide equipment via an Internet service system connected to a program guide server located at a television distribution facility.
137. The system defined in recital 114 further comprising:
   means for providing the user with an opportunity to create a message using the remote access interactive television program guide ;
   means for transferring the message to the interactive television program guide equipment using the remote access link; and
   means for providing the message to the user with the local interactive television program guide.
138. The system defined in recital 114 wherein:
   the remote access interactive television program guide is a remote client version of the local interactive television program guide; and
   the means for providing the user with an opportunity to set at least one program guide setting comprises means for providing the user with an opportunity to set at least one program guide setting using the remote client version of the local interactive television program guide.
139. The system defined in recital 114 wherein the means for providing the at least one program guide setting from the remote program guide access device to the interactive television program guide equipment comprises means for providing the at least one program guide setting to the interactive television program guide equipment using terminal emulation.
140. The system defined in recital 114 wherein:
   the remote access link comprises means for a wireless link; and
   the means for providing the at least one program guide setting from the remote program guide access device to the interactive television program guide equipment comprises means for providing the at least one program guide setting to the interactive television program guide equipment using the wireless link.
141. The system defined in recital 114 wherein:
   the remote access interactive television program guide is a first interactive television program guide ;
   the local interactive television program guide is a second interactive television program guide that is different from the first interactive television program guide; and
   the means for providing the at least one program guide setting from the remote program guide access device to the interactive television program guide equipment comprises means for providing the at least one program guide setting from the first interactive television program guide to the second interactive television program guide.
142. A system for remotely scheduling programming reminders over a remote access link, the system comprising:
   means for providing the user with an opportunity to remotely select a television program for which a reminder is to be scheduled over the remote access link by a remote access interactive television program guide implemented on a remote program guide access device; and
   means for scheduling a programming reminder for the selected program with a local interactive television program guide implemented on interactive television program guide equipment having user television equipment using the remote access interactive television program guide via the remote access link.
143. The system defined in recital 142 wherein the system further comprises means for generating the programming reminder for the program using the local interactive television program guide.
144. The system defined in recital 142 wherein the means for generating the programming reminder for the program using the local interactive television program guide comprises means for generating the programming reminder for the program by sending an email message to the user.
145. The system defined in recital 142 wherein the means for generating the programming reminder for the program using the local interactive television program guide comprises means for generating the programming reminder by paging the user with a page that is transmitted to the user by a paging transmitter.
146. The system defined in recital 142 further comprising:
   means for storing the programming reminder with the remote program guide access device ; and
   means for generating the programming reminder with the remote access interactive television program guide.
147. The system defined in recital 142 wherein the means for generating the programming reminder for the program using the local interactive television program guide comprises means for generating the reminder with the user television equipment.
148. A system for remotely scheduling programming reminders over a remote access link, the system comprising:
   means for providing the user with an opportunity to select a television program for which a reminder is to be scheduled over the remote access link by a local interactive television program guide implemented on a local interactive television program guide equipment having user television equipment; and
   means for scheduling a programming reminder for the selected program with a remote access interactive television program guide implemented on a remote program guide access device using the local interactive television program guide via the remote access link.
149. The system defined in recital 148 wherein the system further comprises means for generating the programming reminder for the program using the remote access interactive television program guide.
150. The system defined in recital 149 wherein the means for generating the programming reminder for the program using the remote access interactive television program guide comprises means for generating the programming reminder for the program by sending an e-mail message to the user.
151. The system defined in recital 149 wherein the means for generating the programming reminder for the program using the remote access interactive television program guide comprises means for generating the programming reminder by paging the user with a page that is transmitted to the user by a paging transmitter.
152. A system for providing a user with remote access to program listings information over a remote access link, the system comprising:
   means for obtaining program listings information with a remote access interactive television program guide implemented on a remote program guide access device from a local interactive television program guide implemented on interactive television program guide equipment over the remote access link; and
   means for providing the program listings information to the user with the remote access interactive television program guide.
153. A system for remotely recording a television program over a remote access link, the system comprising:
   means for providing the user with an opportunity to remotely select a television program for recording over the remote access link by a remote access interactive television program guide implemented on a remote program guide access device from a local interactive television program guide implemented on interactive television program guide equipment; and
   means for remotely recording the television program selected by the user over the remote access link with the remote program guide access device.
154. The system defined in recital 153 further comprising means for obtaining directory information from the local interactive television program guide over the remote access link with the remote access interactive television program guide.
155. The system defined in recital 153 further comprising means for obtaining video information from the local interactive television program guide over the remote access link with the remote access interactive television program guide.
156. The system defined in recital 153 further comprising:
   means for providing the user with an opportunity to select a video for playback by the remote program guide access device with the remote access interactive television program guide;
   means for remotely obtaining the video selected by the user for playback from the local interactive television program guide over the remote access link with the remote program guide access device; and
   means for remotely playing the video for the user with the remote program guide access device.
157. The system defined in recital 153 further comprising means for obtaining audio information from the local interactive television program guide over the remote access link with the remote access interactive television program guide.
158. The system defined in recital 153 further comprising :
   means for providing the user with an opportunity to select audio for playback by the remote program guide access device with the remote access interactive television program guide ;
   means for remotely obtaining the audio selected by the user for playback from the local interactive television program guide over the remote access link using the remote program guide access device; and
   means for remotely playing the audio for the user with the remote program guide access device.
159. A system for recording programs via a remote access link, the system comprising:
   means for providing the user with an opportunity to select a program for recording by a local interactive television program guide implemented on interactive television program guide equipment with a remote access interactive television program guide implemented on a remote program guide access device; and
   means for recording the program selected by the user with the local interactive television program guide on the interactive television program guide equipment.
160. The system defined in recital 159 wherein the means for recording the program selected by the user with the local interactive television program guide on the interactive television program guide equipment comprises means for recording the program on the user television equipment.
161. The system defined in recital 159 wherein the means for recording the program selected by the user with the local interactive television program guide on the interactive television program guide equipment comprises means for recording the program at a television distribution facility.
162. A system for remotely playing a television program over a remote access link, the system comprising:
   means for providing the user with an opportunity to remotely select a television program for playing with a remote access interactive television program guide implemented on a remote program guide access device ;
   means for obtaining the television program from a local interactive television program guide implemented on interactive television program guide equipment with the remote access television program guide; and
   means for remotely playing the television program with the remote program guide access device.
163. A system for remotely ordering pay-perview programs with a local interactive television program guide via a remote access link, the system comprising :
   means for providing the user with an opportunity to order a pay-per-view program with a remote access interactive television program guide implemented on a remote program guide access device ;
   means for providing a local interactive television program guide implemented on interactive television program guide equipment with an indication of the ordered-pay-per-view program, wherein the interactive television program guide equipment is connected to the remote program guide access device via the remote access link, and wherein the interactive television program guide equipment comprises means for user television equipment; and
   means for performing the at least one function related to ordering pay-per-view programs with the local interactive television program guide based on the indication.
164. The system defined in recital 163 further comprising means for the pay-per-view program with the local interactive television program guide.
165. The system defined in recital 163 wherein the means for performing the at least one function related to ordering pay-per-view programs with the local interactive television program guide based on the indication comprises means for displaying a reminder that the pay-per-view program was missed on the user television equipment.
166. The system defined in recital 163 wherein the means for performing the at least one function related to ordering pay-per-view programs with the local interactive television program guide based on the indication comprises means for displaying a reminder that the pay-per-view program is starting on the user television equipment.
167. A system for providing a user with remote access to functions of an interactive television program guide over an Internet link, the system comprising :
   means for providing the user with an opportunity to remotely set at least one program guide setting over the Internet link using a remote access interactive television program guide implemented on a personal computer connected to an Internet service system by the Internet link;
   means for providing the at least one program guide setting over the Internet link to a local interactive television program guide implemented on interactive television program guide equipment; and
   means for performing the at least one program guide function with the local interactive television program guide using the at least one program guide setting.

The foregoing is merely illustrative of the principles of this invention and various modifications can be made by those skilled in the art without departing from the scope of the invention.

## Claims

1. A program guide system for implementing guide-to-guide communication, comprising:
television program guide equipment (17) implementing a first interactive program guide that enables a user to navigate through displayed program listings and set a reminder for a listing or schedule a recording for the listing;
a remote program guide access device (24) implementing a second interactive program guide that also enables the user to navigate through the displayed program listings and set the reminder for the listing or schedule the recording for the listing;
a remote access link (19) between the television program guide equipment and the remote guide access device, wherein the second interactive program guide is configured to transfer a setting for the reminder for the listing set on the second interactive program guide over the remote access link to the first interactive program guide on the television program guide equipment, and the first interactive program guide generates the reminder for the program corresponding to the listing at the appropriate time.

2. The system defined in claim 1 wherein another function of the program guide is a parental control feature and:
the second interactive program guide enables the user to set a parental control setting and transfer the parental control setting over the remote access link to set a corresponding parental control setting in the first interactive program guide; and
the first interactive program guide is configured to block a program or channel based on the parental control setting.

3. The system defined in claim 1 wherein another function of the second interactive program guide enables the user to adjust channel settings and other preferences which adjustments are transferred to the first interactive program guide over the remote access link (19).

4. The system defined in claim 1, further comprising:
comprises a communications device (37) connected to the remote access link (19), wherein the first interactive program guide is further configured to enable the user to set settings of the first interactive program guide via the communications device (37) with the second interactive program guide.

5. The system defined in claim 1, wherein the second interactive program guide is configured to enable the user to access a video-on-demand library.

6. The system defined in claim 1 wherein the second interactive program guide is further configured to generate the reminder on remote guide access device.

7. A method for implementing guide-to-guide communication, comprising:
generating for display program listings on television program guide equipment (17), wherein the television program guide equipment (17) implements a first interactive program guide that enables a user to navigate through the displayed program listings and set a reminder for a listing or schedule a recording for the listing;
generating for display the program listings on a remote program guide access device (24), wherein the remote program guide access device (24) implements a second interactive program guide that also enables the user to navigate through the displayed program listings and set the reminder for the listing or schedule the recording for the listing;
transferring a setting, over a remote access link (19) between the television program guide equipment and the remote guide access device, for the reminder for the listing set on the second interactive program guide over the remote access link to the first interactive program guide on the television program guide equipment; and
generating for display the reminder for the program corresponding to the listing at the appropriate time on the first interactive program guide.

8. The method defined in claim 7 wherein another function of the program guide is a parental control feature and:
the second interactive program guide enables the user to set a parental control setting and transfer the parental control setting over the remote access link to set a corresponding parental control setting in the first interactive program guide; and
the first interactive program guide is configured to block a program or channel based on the parental control setting.

9. The method defined in claim 7, further comprising adjusting channel settings and other preferences of the second interactive program guide, wherein the adjustments are transferred to the first interactive program guide over the remote access link (19).

10. The method defined in claim 7, further comprising setting settings of the first interactive program guide via the communications device (37) with the second interactive program guide.

11. The system defined in claim 1, wherein the second interactive program guide is configured to enable the user to access a video-on-demand library.

12. The system defined in claim 1 further comprising generating for display the reminder on remote guide access device.
